Europäisches Patentamt

European Patent Office

Office européen des brevets

(11) Publication number: **0 268 476**
**A2**

# (12) EUROPEAN PATENT APPLICATION

(21) Application number: **87310209.9**

(22) Date of filing: **19.11.87**

(51) Int. Cl.⁴: **G 09 B 7/04**
**A 63 F 9/00**

(30) Priority: **19.11.86 CA 523388**

(43) Date of publication of application:
**25.05.88 Bulletin 88/21**

(84) Designated Contracting States: **DE FR GB**

(71) Applicant: **Bar, Dali**
**3015, Kennedy Road Suite 2**
**Scarborough Ontario M1V 1E7 (CA)**

(72) Inventor: **Bar, Dali**
**3015, Kennedy Road Suite 2**
**Scarborough Ontario M1V 1E7 (CA)**

(74) Representative: **Brown, David Alan et al**
**MATHYS & SQUIRE 10 Fleet Street**
**London EC4Y 1AY (GB)**

(54) Trivia game and components therefor.

(57) A game for play by at least two participants, the game comprising (1) a controller to co-ordinate the playing of the game; (2) a score keeper to calculate scores, retain total scores and assign scores for all participants; (3) a time counter to account for the passage of time within the play of the game; (4) a plurality of push buttons, one for each participant, each button to be activated by a participant to enable the controller to recognize that a participant has responded; (5) an input to inform the controller of the correctness of the participant's response and for causing the score keeper to add or deduct points from each of the participant's scores; (6) an output to inform each participant of his total score as assigned by the score keeper; (7) a tape to both provide questions to the participant for a response as well as to provide signals to the controller.

FIG.1.

## Description

FIELD OF INVENTION

This invention relates to microprocessor controlled games and more specifically those which simulate a quiz show or trivia game wherein questions are asked of a group of players who compete against each other for points available.

BACKGROUND OF THE INVENTION

Many trivia or quiz type games exist in alternative formats. Some are board games while others are played with the assist of electronic mechanisms. Many of these games are embodied in multiple choice format. A typical example of such a multiple choice quiz game is found in U. S. Patent 4,227,318 authored by Calvin Mims wherein a quiz game is taught being embodied in a box having indicator lights signifying an answer by a respondent and a correct answer light corresponding to an answer precoded on a game card. If the answer light by the respondent and the game card answer light correspond then a correct answer has been given. A board is incorporated in the game and respondents move ahead thereon in proportion to the number of correct answers provided. A timer may also be provided to vary the time players have to respond to each question.

Another example of a more sophisticated multiple choice quiz game is found in "Party Quiz" manufactured by Suncom, for use with a personal microcomputer. An operating system is input into the RAM of the computer and the questions are fed in from a separate data disk embodied separately. The program also keeps score for all players and indicates wrong/right answers. A handicap format is available within a given range. This game as in most computer games require special interfaces and joy sticks, the necessary cords and connectors, and of course a microcomputer to play the game.

U. S. Patent 4,164,078 teaches another multiple choice quiz game wherein a response mechanism is provided which will indicate whether or not the user selected the right answer, on the basis of his/her response on input switches which are connected to a microprocessor contained in a housing upon which is secured sheets of questions. The electronic microprocessor is programmed with an algorithm which will recognize the coded input of a player and compare it against the coded answer and can indicate "correct" or "incorrect" without having substantial information regarding the question. This is similar in operation to U. S. patent 4,303,398 assigned to Coleco Industries within which the aforementioned patent is cited, having an electrically connectable listing means attachable to a base providing a listing of questions and associated sets of answers, rendering the answers and the questions to numerical values for comparison purposes and resultant output.

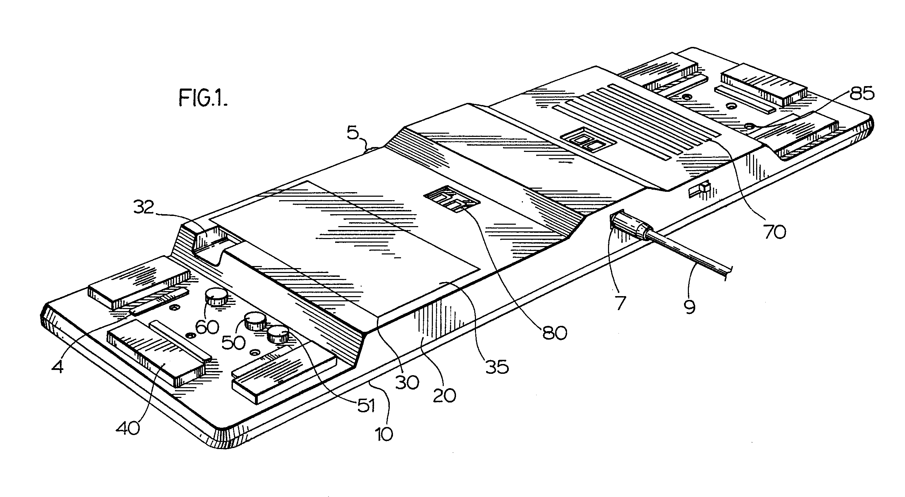

U. S. Patent 4,286,323 by Horace H. Meday describes an "Electronic Scoring Device" used in conjunction with a game but not incorporated within the game, having circuit means to receive score information programmed for each set of game rules being played. Fig. 1 illustrates such a device. Hence the scoring information is accumulated for a game played independently.

U. S. Patent 4,519,606 by Guy W. Lussiez describes a spelling game which in example 3 at column 3 discloses that the words are stored within an electronic device. In the play of the game the words are randomly chosen, and the definition displayed on a screen. The player inputs his/her spelling which is compared to the spelling in the electronic memory, and if the player is correct points are awarded to the player. The other players may challenge the spelling of a word at anytime.

French Patent 2,572,207 describes an electronic question and answer game having a microprocessor contained in a case also having a power supply, memory, input keys and output displays.

Belgian Patent 895,612 describes an Educational Tool within which is used inaudible frequencies coded upon a video tape for program control used in conjunction with the video game equipment, in one example for multiple choice questions.

Belgian Patent 850,824 describes a closed circuit TV system for question and answer games. It uses an audio cassette and a microprocessor to accomplish the task.

Finally, French Patent 2,448,756 as best understood purports to teach an audio visual device for teaching games having cassette recorder control. The cassette recorder reads stored information representing audio and programme signals. Participants in the game operate individual control units connected to control interfaces with a microprocessor.

To applicants best understanding none of the aforementioned references incorporates an economical simple, compact intergrated, trivia game which provides an updated tally for all competing players, allowing only the first indicating player to answer a given question, allowing for the challenging of the answer given, having an enhanced bluffing attribute and awards points on the basis of correct and/or challenged answers.

It is therefore an object of this invention to provide and electronic game and components therefor which are simple to use, and inexpensive to purchase.

It is a further object of this invention to provide within an electronic game means which keeps track of all players total scores.

It is a further object of this invention to provide novel components suitable for use in a trivia type game, for example in a tape player.

It is still a further object of this invention to provide an electronic game which is portable and compact.

Further and other objects of the invention will become apparent to a man skilled in the art when considering the following summary of the invention and the more detailed embodiments of the invention illustrated herein.

SUMMARY OF THE INVENTION

According to one aspect of the invention, a game is provided (in a preferred embodiment, being a trivia game) said game comprising:   (1) control means to co-ordinate the playing of said game;

(2) score keeping means to calculate scores, retain total scores, and assign scores for all participants;

(3) time counting means to account for the passage of time within said game;

(4) a plurality of response means, one for each participant, each response means to be activated by a participant to enable the control means to recognize that a participant has responded;

(5) input means to inform said control means of the correctness of the participant's response and for causing the score keeping means to add or deduct points from each of the participant's scores;

(6) output means to inform each participant of his total score as assigned by said score keeping means;

(7) data means to both provide questions to the participant for a response, as well as to provide signals to said control means (in a preferred embodiment comprising a cassette tape) ;

whereby when said game is played, data means are activated by said control means to provide questions to the participants who are permitted by said time keeping means to respond to said question within a first predetermined time by one participant activating said response means, at which time said respondent answers the question correctly or incorrectly, and the remaining participants are permitted by said time keeping means to challenge the correctness of said answer within a second predetermined time signifying a challenge by activating their response means, if no challenge is made, points are automatically awarded to the participant activating said response means during the first predetermined time, and if challenged, the correctness of the participant's answer is judged by comparing said answer to that provided by said data means, whereby the input means is activated causing said score keeping means to display the resultant score of said participants upon said output means to inform the participants of their scores.

According to another embodiment of the invention, a trivia game in an integrated format is provided, said game comprising:

memory storage and microprocessing means to co-ordinate the play of said game, said memory storage and microprocessing means comprising, game logic contained therein to co-ordinate the play of said game, score keeping means contained therein to retain and assign the scores of all participants, and time counting means to account for the passage of time within said game and communicate said passage to the participants;

response means for each participant to communicate with said memory storage and microprocessing means that one player is responding, preferably said response means being buttons pressed by said respondent in the course of answering a question;

input means to inform said memory storage and microprocessing means of the correctness of a participant's response, in a preferred embodiment said input means being right and wrong buttons;

output means to inform each participant of his scores as assigned by said score keeping means, preferably said output means including a light emitting diode for each participant;

data means to both provide questions to the participants for a response under the control of said memory storage and microprocessing means, and to provide information about the gaming process to the memory storage and microprocessing means, said data means, preferably being an audio cassette playable by a stereo playback head having two tracks, one track carrying the questions and the other track carrying inaudible tones to provide information about the gaming process which tape when scanned by a stereo playback head, provides the audio signals in the form of questions through a speaker and provides said memory storage and microprocessing means with inaudible tones to provide input to the memory storage and microprocessing means, for example as to the points to be awarded for a given question;

whereby as said game is played, said data means activated by said memory storage and microprocessing means, provides questions to the participants and data to said memory storage and microprocessing means, which participants are prompted by a time countdown by said time counting means contained within said memory storage and microprocessing means to respond to said questions within a first specified time period and signify their intention to respond by activating said response means, whereby in doing so successfully, said respondent answers the question either correctly or incorrectly, and the remaining participants are prompted by said time keeping means to challenge the correctness of said answer within a second specified time period, signifying their intention to challenge to said memory storage and microprocessing means by activating said response means, whereat the correctness of a respondent's answer is judged following the second specified time period by comparing said answer to that contained within said data means controlled and activated by said memory storage and microprocessing means, the correctness of said answer thereafter communicated to said score keeping means by said input means, whereby if no challenge is made during the second specified time period, an automatic score is awarded to the participant activating said response means during the first specified time period; the resultant score of said participants thereafter awarded to each participant by said score keeping means, as instructed by said memory storage and microprocessing means and thereafter, displayed upon said output means to inform the participants of their scores.

According to another aspect of the invention, in a preferred embodiment thereof, a trivia game is provided, said game comprising; a modular case preferably formed of thermoplastics materials having a top, bottom and two ends, the casing having disposed therein a tape player upon which a programmed taped is played; the programmed tape comprising a first and second track, the first track providing questions and answers in audio format for the respondents, the second track providing output data (preferably inaudible tones) for co-ordination of said game and for example to indicate to a microprocessor the point value of the following questions on the first track; response buttons for participants positioned about some of the perimeter of said modular case, preferably mounted proximate each end; a speaker to output the audio contents of said programmed tape; means to permit the memory storage and microprocessor to understand the contents of the tape, for example a tone decoder to decode the programmed tones on said tape to a format understood by said memory storage and microprocessor; a pre-programmed memory storage and microprocessor for receiving understandable programmed data, and to co-ordinate the game according to its pre-established logic contained therewithin, said memory storage and microprocessor also containing both the time keeping and score keeping functions to enhance and simplify the game operation; an array of indicators, for example light emitting diodes, providing information to each participant; a right and wrong button to provide input to said memory storage and microprocessor as to the correctness of the answer given; (preferably also including a pause button to allow a controlled break in said game) ;

said memory storage and microprocessor having contained therein a program to co-ordinate the playing of said game on the basis of input from: said tape player providing data programmed on said tape preferably decoded by said decoder to inform said memory storage and microprocessor, for example of the type of question about to be asked and the scoring and strategy to be used in co-ordinating said game; said response buttons providing input to said memory storage and microprocessor means as to which participant has firstly indicated his intention to answer the question asked found within the programme of the tape, and which participants are challenging the answer given said wrong and right buttons providing input to the memory storage and microprocessing means as to the correctness of the response given said memory storage and microprocessor means providing on the basis of its pre-programmed logic and the inputs given, outputs to control the playing of said tape on said tape player, and to display the scores accumulated for each participant in its registers, adding to said scores any points accrued during the last question as a result of a correct answer and/or challenge and subtracting from said scores any points lost during the last question as a result of an incorrect answer and/or challenge prior to the displaying of said scores; preferably said tape player having contained therein a tape player housing, read heads, and a pair of drive spindles for driving a tape and a unique dust cover housing pivotally secured to the tape player pivotable from a position coplanner with the tape player to a position angled with respect thereto for receiving and protecting a tape and further protects the read heads from dust, the read heads slideably engageable with the tape at a position of primary engagement for reading said tape and slideably disengageable from the tape by moving laterally to a position laterally remote said tape, said dust cover housing carrying ejecting means for ejecting said tape when pivoted at an angle to the tape player, thereby eliminating all control buttons from said tape player, said dust cover housing having a top, bottom, and plurality of sides, the top and bottom spaced apart a distance to present a mouth and to allow therebetween the retention of the programmed tape, said top and bottom being pivotable at the ends thereof with respect to said tape player and with respect to one another, said bottom comprising two members, said first member for co-operatively engaging and ejecting the tape with said top and said second member being resiliently biased in a lateral direction for slideably disengaging or engaging the read heads of said tape player when the dust cover housing is pivoted from a position of primary engagement with the tape to a position of secondary engagement; preferably said first and second members having means disposed thereupon proximate the adjacent edges thereof to ensure proper alignment thereof when receiving a tape to be played and positioning said tape proximate said read head, and preventing damage to the tape or tape player if the means are not aligned by retaining the read head remote the tape;

whereby as the game is played, said tape player is selectively activated by said memory storage and microprocessor thereby providing questions to the participants and data to said memory storage and microprocessor, each participant being prompted to respond to said question by a time countdown for example appearing upon a seven segment light emitting diodes activated by said memory storage and microprocessor, said intention to respond indicated by activating said response buttons within a first specified time period, the activation of which signifies the intent of a participant to respond to said question to said memory storage and microprocessor, whereby doing so successfully, said respondent answers the question either correctly or incorrectly, and the remaining participants are prompted by said time countdown to challenge the correctness of said answer within a second specified time period, the participants signifying their intention to challenge by activating said response buttons, whereat the correctness of a respondent's answer is judged by comparing said answer to that contained within the tape controlled and activated by said memory storage and microprocessor, the correctness of said answer thereafter communicated to the memory storage and microprocessor by the participants via said right or wrong buttons, wherein the score keeping function of the memory storage and microprocessor awards the correct points to each participant as instructed by the program therewithin, the scores thereafter displayed preferably upon the light emitting diodes to inform the participants of their scores.

In a preferred embodiment of the invention, the quiz game tape has programmed bonus questions and special rounds thereon, each situation being communicated to and sensed by the memory storage and microprocessor via a pre-specified series of second tones found upon the second track of the programmed game tape, said bonus question enhancing (for example allowing double or triple, etc. ) the usual available points for the correct answer and/or challenge of a given random question. According to another embodiment, the special rounds may also provide for the handicapping of players where those with the lowest score are given time in advance to the time allotted higher scoring players to respond to the question whereby his/her response button is activated in advance of the activation of the higher scorer's response button so that the lowest scorer's button is activated first, then the second lowest scorer's button, then the third lowest scorer until the highest scorer, thereby giving said lowest scoring participants an opportunity to close the gap in scoring.

In a preferred embodiment of the invention, the tape is recorded at other than standard speed and is driven by a motor at said non-standard speed to provide normal sounding audible tapes.

In another preferred embodiment of the invention, the light emitting diodes are coupled to individual display drivers to amplify the scores provided by the memory storing and microprocessor prior to display. The display drivers, and the memory storage and microprocessor are software multiplexed during the transmission of the scores, said multiplexing function contained within the memory storage and microprocessor program as opposed to the provision in the game circuitry for a hardware multiplexor.

According to another aspect of the invention, a method for playing a game (preferably by at least two participants) is provided, said method comprising:

(a) administering a question from subgroups of scoring categories to the participants, said question being selected from storage media being ordinary, bonus, or special in designation;

(b) determining the first participant to indicate his/her intention to respond to said question;

(c) precluding the other participants from responding;

(d) permitting a first time period to pass during which the first participant must answer the question;

(e) permitting a second time period to pass within which the remaining participants may challenge the answer given;

(f) determining the correctness of the answer given;

(g) determining if any of the participants have challenged the answer to the given question; and

(i) if none of the participants has challenged the answer to the given question, awarding points to the first participant and;

(ii) if at least one of the participants challenged the answer to the question, awarding points to those participants who were correct and subtracting points from those that were incorrect;

(h) determining an updated score for all particpants;

(i) repeating the aforementioned steps for each question until a ranking of participants is determined upon termination of the game.

According to another aspect of the invention, a method for playing a game (preferably by at least two participants) is provided, said method comprising:

(a) administering a question from subgroups of scoring categories to the participants, said question being ordinary, bonus or special in designation;

(b) determining the first participant to indicate his/her intention to respond to said question;

(c) precluding the other participants from responding;

(d) permitting a first time period to pass during which the first participant must answer the question;

(e) permitting a second time period to pass within which the remaining participants may challenge the answer given;

(f) determining the correctness of the answer given;

(g) determining if any of the participants have challenged the answer to the given question and

(i) if none of the participants has challenged the answer to the given question, awarding points to the first participant;

- and -

(ii) if at least one of the participants challenged the answer to the question, awarding points to those participants who were correct and subtracting points from those that were incorrect;

(h) determining an updated score for all participants;

(i) repeating the aforementioned steps for each question until a ranking of participants is determined upon termination of the game.

For example, with respect to step (g) (ii) if one of the participants challenges successfully then points are awarded to the successful challenger and substracted from the score of the first particpant. If one of the participants challenges unsuccessfully, then points are substracted from the score of the participant who challenged and points awarded to the first participant including any bonus points if available

According to yet another aspect of the invention, the game may be played in either team or individual modes. Preferably the game may further be played in either beginner or advanced modes for both the team and individual modes.

According to yet another aspect of the invention, the method of playing the game may be played in team or individual mode. Preferably the method may further be played in either beginner or advanced modes for both the team and individual modes.

A tape player having contained therein a tape player housing, read heads, and a pair of drive spindles for forwardly driving a tape, a unique dust cover housing pivotably secured to the tape player pivotable from a position co-planar with the tape player to a position angled with respect thereto for receiving a protecting a tape and further protects the read heads from dust, the read heads slideably engageable with the tape at a

5

position of primary engagement for reading said tape and slideably disengageable from the tape by moving laterally to a position laterally remote said tape, said dust cover housing carrying ejecting means for ejecting said tape when pivoted at an angle to the tape player thereby eliminating all control buttons from said tape player, said dust cover housing having a top, bottom and plurality of sides, the top and bottom spaced apart a distance to present a mouth and to allow therebetween the retention of the programmed tape, said top and bottom being pivotable at those ends thereof and with respect to said tape player and with respect to one another, said bottom comprising two members, said first member for co-operatively engaging and ejecting the tape with said top and said second member being resiliently biased in a lateral direction for slideably disengaging or engaging the read heads of said tape player when the dust cover housing is pivoted from a position of primary engagement with the tape to a position of secondary engagement; preferably said first and second members having means disposed thereupon proximate the adjacent edges thereof to ensure proper alignment thereof when receiving a tape to be played and positioning said tape proximate said read head, and preventing damage to the tape or tape player if the means are not aligned by retaining the read head remote the tape.

According to yet another aspect of the invention, the game may comprise a video game wherein both audio and visual information are presented to the participants, for assimilation of said information in playing the game and for enhancing the presentation of the game to the participants, said game comprising a microcomputer to coordinate the playing of the game, to interface with the input means of the game, to select the questions to be played randomly in the game, to provide the smooth transfer of data and to coordinate the output of audio and picture information;

memory storage means and in a preferred embodiment thereof compact disk read only memory including a second microcomputer, a compact disk read only memory drive, a two-port disk buffer and a local memory, the memory storage means being responsible for retrieving data according to the instructions of the first microcomputer of the control means;

and data means preferably comprising two separate functions for managing the video and audio output data signal assimilation and for converting the aforementioned digital data into analogue form as necessary, and/or into an array of information to be communicated to a CRT output display or speaker.

According to yet another aspect of the invention, the video game may comprise an integrated format wherein the entire game is embodied as a coin operated video unit wherein the video display is oriented in a horizontal direction and the housing for the game includes a horizontal surface, for example a table around which the participants sit and inter-relate as the game is played.

## BRIEF DESCRIPTION OF THE DRAWINGS

Figure 1 is a perspective view of the game in a preferred embodiment of the invention.

Figure 2 is a schematic diagram in block form of the internal functions contained within the game illustrated in Figure 1 in a preferred embodiment of the invention.

Figures 3, 4 and 4A provide a flow chart describing the logic of the game in Figure 1 according to a preferred embodiment of the invention.

Figures 5 through 6 provide perspective front, top, and side views of novel tape player components according to a preferred embodiment of the invention.

Figures 7 through 9A provide a sequence of views of inserting and removing a tape from the game and alignment of the components therefor.

Figures 9B through 9D illustrate a novel button design in a preferred embodiment of the invention.

Figure 10A through 10C (circuit drawings) provides electronic details on the components of the schematic block diagram found in Figure 2 according to a preferred embodiment of the invention.

Figures 11 to 26 inclusive illustrate pictorially the play of the game and the allocation of points playing the game shown in Figure 1.

Figures 27 and 28 illustrate the cycling of players' scores in a preferred embodiment of the invention.

Figure 29(1) through 29(25) illustrates the sequence of events of the game logic in a preferred embodiment of the invention.

## DETAILED DESCRIPTION OF THE DRAWINGS

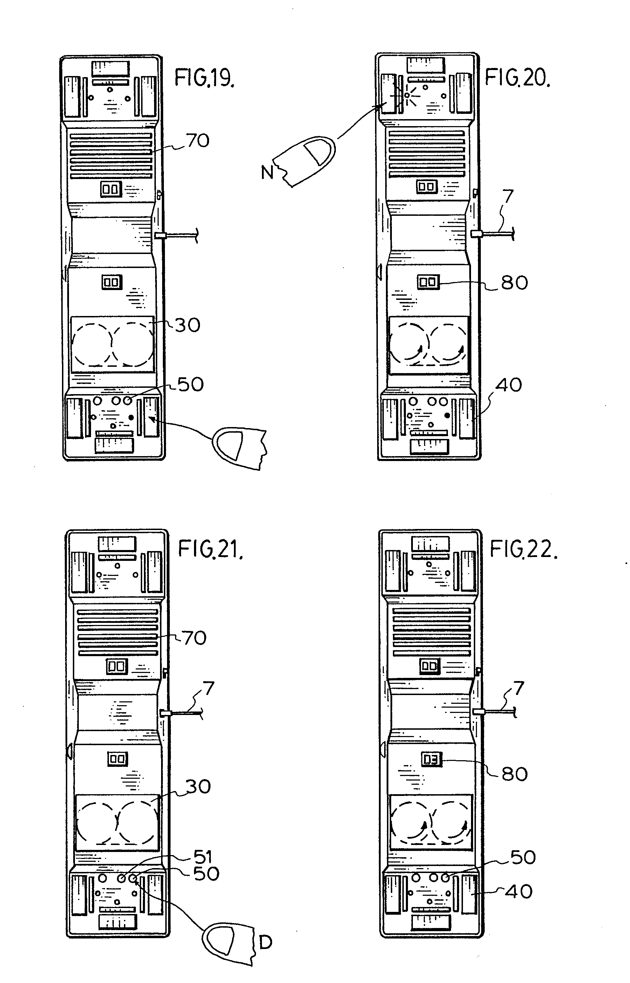

Referring now to Fig. 1 illustrating the game generally referred to as 10 contained within a molded thermoplastic case 20 formed as illustrated having a top, bottom, and plurality of sides and having disposed upon its top an integral microprocessor controlled cassette player 30 having a dust cover 35 disposed adjacent to a centrally positioned Seven Segment Light Emitting Diodes 80 used to display the scores of each participant in digital form. A finger opening 32 is provided to enable the participants to easily access the cover 35. Adjacent the L. E. D. 's remote the tape player is an audio speaker 70 from which audible questions and instruction are directed towards each participant. At each end of the game are positioned response buttons 40 which communicate with a microprocessor (see Figure 17). Each response button has located adjacent to it proximate the centre of the game a discrete L. E. D. , one of which lights to indicate the respondent entitled to answer the question, and all of which flash to indicate the respondent entitled to challenge the answer. At the end of the game proximate the tape player are positioned right/wrong buttons 50, 51 and pause button 60, the right or wrong buttons 50, 51 signifying to the microprocessor when activated by the participants the correctness of the reply given by the participant. The pause button 60 stops further activity of the game or its participants when activated until such time as it is pressed again. A volume control 5 is provided for adjustment of the sound volume from speaker 70.

Game 10 is integrated fully, meaning it requires no other parts or components, wires, interfaces or external interferences other than a power supply 7 and cord 9 and a program tape cassette (not illustrated) . Embossed raised portions 4 are further provided to label each button's use when the casing 20 is manufactured.

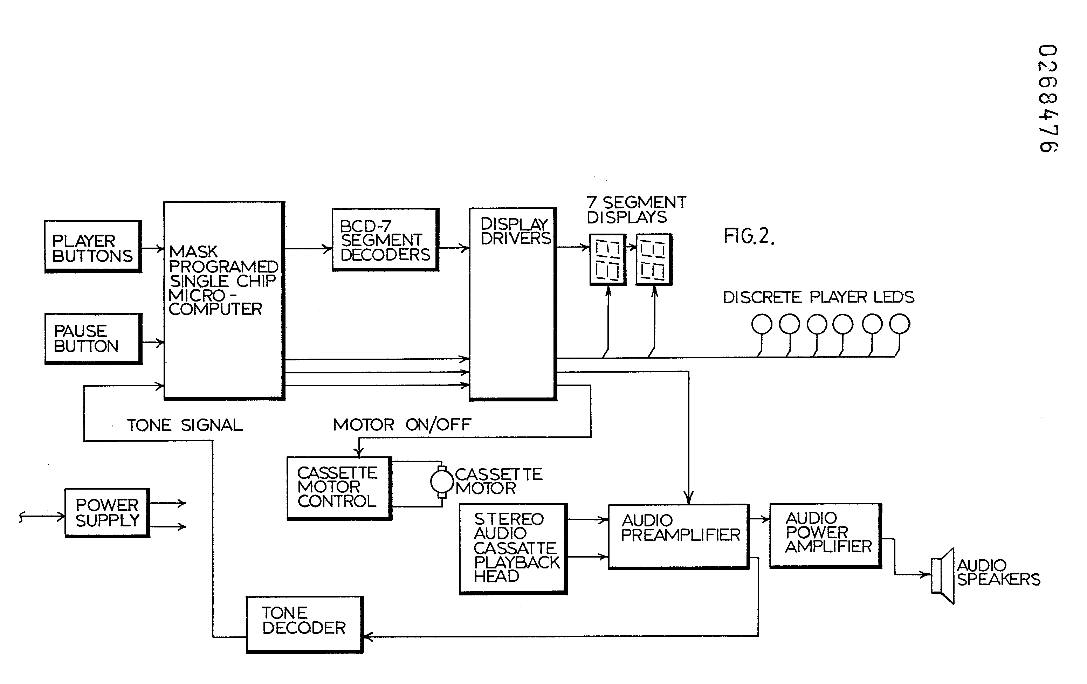

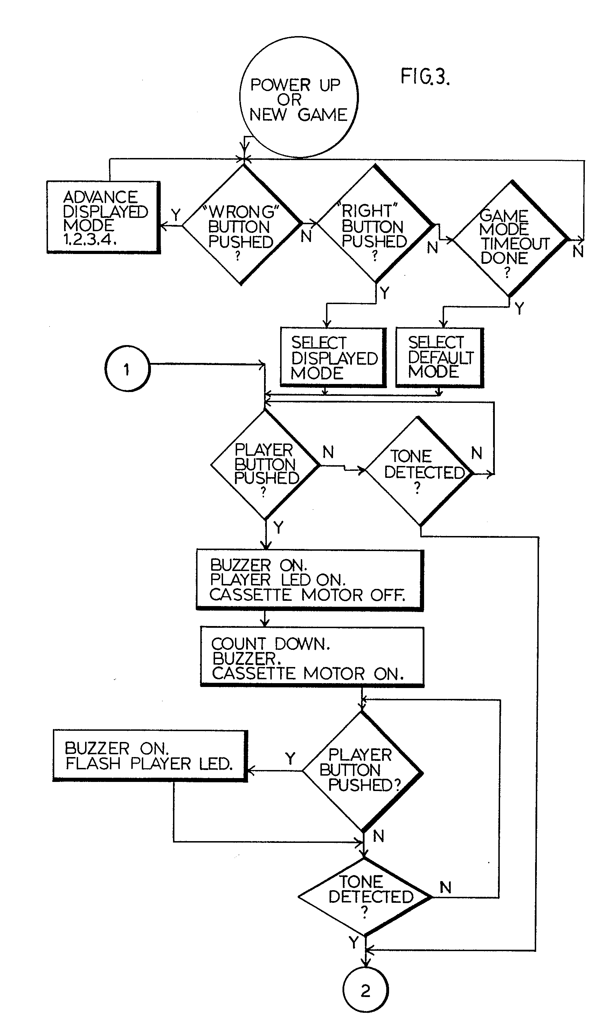

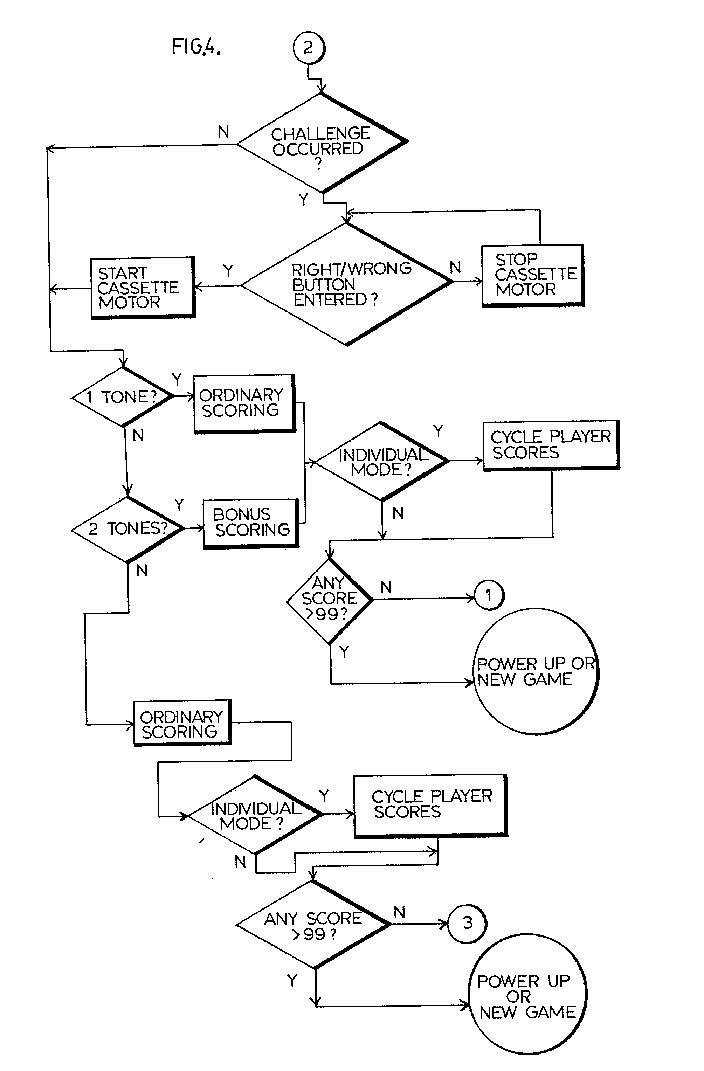

Referring now to Figure 2 illustrating the components of game 10 in schematic block diagram form, microprocessor 90 (see Figure 17-model 78611) is provided being a single chip programmed and masked upon manufacture, obtaining input from right/wrong buttons 50, 51, the players buttons 40, the pause button 60, and tone decoder 190. The microprocessor 90 then responds within (see Figures 3 through 4A) the game format logic contained therein to these inputs at various intervals in the game being played, assimilates the information according to its pre-programmed instructions (see Figure 35) within its memory and provides outputs to, the cassette motor control 130 controlling cassette motor 140, binary coded decimal seven segment decoders 110, and display drives 120 and hence causes L. E. D. 's 80 to light up sequentially indicating the score of all participants to date. Further player L. E. D. 's 85 indicate which player is entitled to respond/challenge. When the cassette motor control 130 is activated by the microprocessor 90 a program tape (not shown) is passed by Stereo Playback Head 150 at approximately 1. 16 inches per second (a non-standard speed) wherein are contained the questions for the participants on one track, and inaudible tones on the other track said tones to be sent to the tone decoder 190 and hence to microprocessor 90. The audible tones are fed through an audio pre-amplifier 160, then through an audio power amplifier 170 and output to the participants through audio speaker 180 via known techniques. However the multiplexing of signals fed through display drivers 120 from microprocessor 90 is unique in that the multiplexing function is carried out via the software contained within the microprocessor and memory functions therein, thereby eliminating the need for a hardware multiplexing component.

Referring now to Figures 3 through 4A, in conjunction with Fig. 2, a flow chart is provided indicating the logic through which the game proceeds as seen from the point of view of the microprocessor. Following the flow chart therefore from top to bottom the game is "powered up" by engaging power supply 100 thereby energizing the seven segment L. E. D. 's signified by a numeral 1 display. The microprocessor then awaits input from the game participants to inform it what mode the game will be played in. The game is played in four modes. Individual mode at a beginner level signified by the numeral 1 in the seven segment L. E. D. 's, team mode at a beginner level signified by the numeral 2, Individual mode at an advanced level signified by the numeral 3, and team mode at an advanced level signified by the numberal 4. For example, if a participant depresses the "wrong" button 50 resulting in advance of the numeric display in the L. E. D. 's to the numeral 2, and then sequentially depresses the "right" button 51, then team mode at a beginner level is activated signifying that the participants whose response buttons are situated proximate the speaker are on one team, and that team will compete with the team whose participants has response buttons proximate the tape player. If the participants however do not depress the wrong or right button, this signifies to the microprocessor by default that the game will be played in individual mode at a beginner level and all scores are to be activated. The tape then begins to run as microprocessor 90 engages motor control 130. The participants hear via audio speaker 180 their instructions, any relevant information, and finally the question to which they may respond. At the same time inaudible tones are fed through the tone decoder 190 to microprocessor 90 at necessary intervals to inform the microprocessor about the question to follow. This will now be explained in detail.

The participants in the game must decide whether or not to respond to the question given. If one participant does respond then a buzzer will sound and his/her discrete L. E. D. 85 will light, while the other L. E. D. 's are off, which signifies to all participants, which participant is allowed to answer the question, by reason of being the first one to activate his/her response button. The cassette motor is then deactivated by the microprocessor. A countdown begins 5-4-3-2-1-0 within which period an answer must be given. The cassette motor then runs again as dictated by the microprocessor until such time as a second participant challenges the answer given by depressing his/her response button 40 prior to any inaudible tones being transmitted to the microprocessor 90 via tone decoder 190, the transmission of which signal to the microprocessor precludes any participant from challenging the respondent and hence the microprocessor assumes any answer given as correct and awards points according to the instructions given the microprocessor as to scoring method. Should a participant challenge the answer given then a buzzer will sound and the discrete L. E. D. above the challenger's response button will flash signifying a challenge. In either case the tape will continue to play and the answer will be given until such time as the game will stop in this example awaiting input via the buttons 50,51 and thereafter continues to run receiving inaudible tones to instruct the microprocessor on the next round, said round being either ordinary, bonus or special. Ordinary scoring means that a correct answer is worth 2 points if unchallenged and 3 points if challenged. Incorrect answers or incorrect challenges lose 1 point, correct challenges gain 1 point. Bonus scoring means simply that the input of right/wrong answer/challenges is doubled. As only two seven segment L. E. D. 's are being used then the players' scores are cycled through by the game as indicated by the combination of the seven segment L. E. D. and the lighted discrete L. E. D.

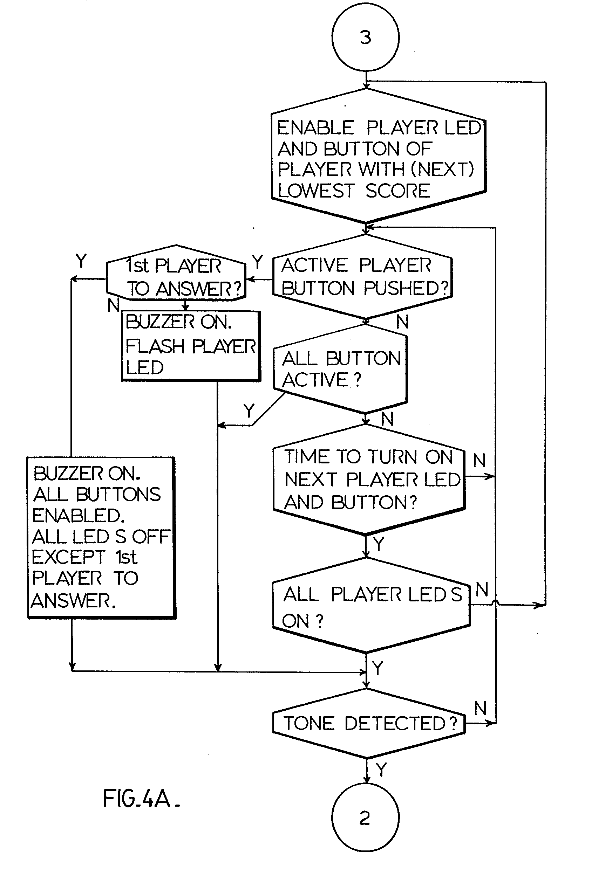

Referring to Figure 4, the Special Round was designed to provide a mechanism for players who are behind to catch up to the leader by handicapping all participants via a predefined algorithm within the memory of the microprocessor. The Special Round begins by all discrete L. E. D. 's being turned off by the microprocessor 90. The lowest equal score's(s') discrete L. E. D. 's are then lit, and the corresponding response buttons activated, the question is played and the participant(s) whose L. E. D. is lit may respond only. No other participant may respond until such time as his/her discrete L. E. D. is lit and response button activated. As time passes if the intial participant hase buttos not depressed his/her response button, then the next participant will be activated, and then the next until all are participating. However if at any time one of the previously activated buttons were depressed then the game proceeds as if in the ordinary mode. In this embodiment what occurs is that the microprocessor turns on the L. E. D. 's at 2 second intervals giving the participant with the lowest score that advantage and the others a handicap. However if six players were playing the first participant (having the lowest score) would have an advanced number of seconds ahead of the sixth participant (having the highest score) .

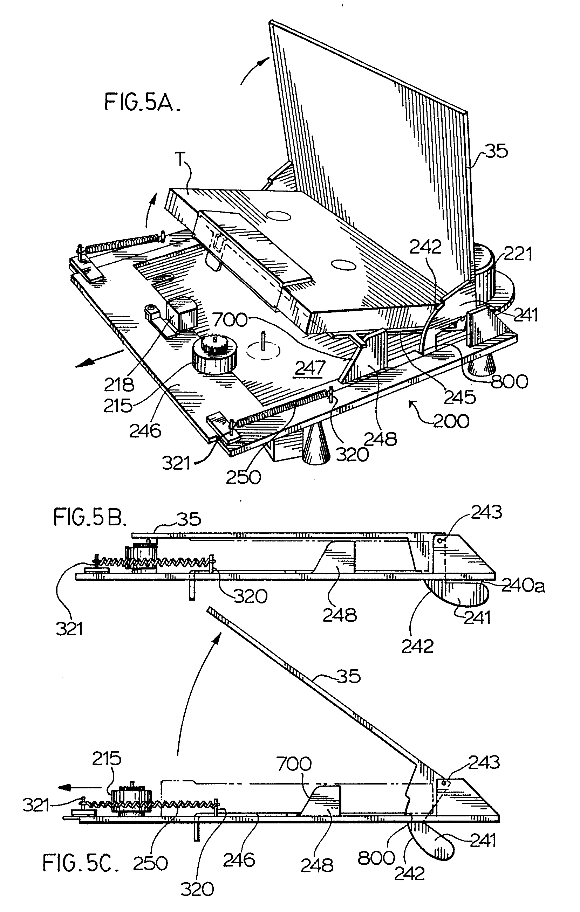

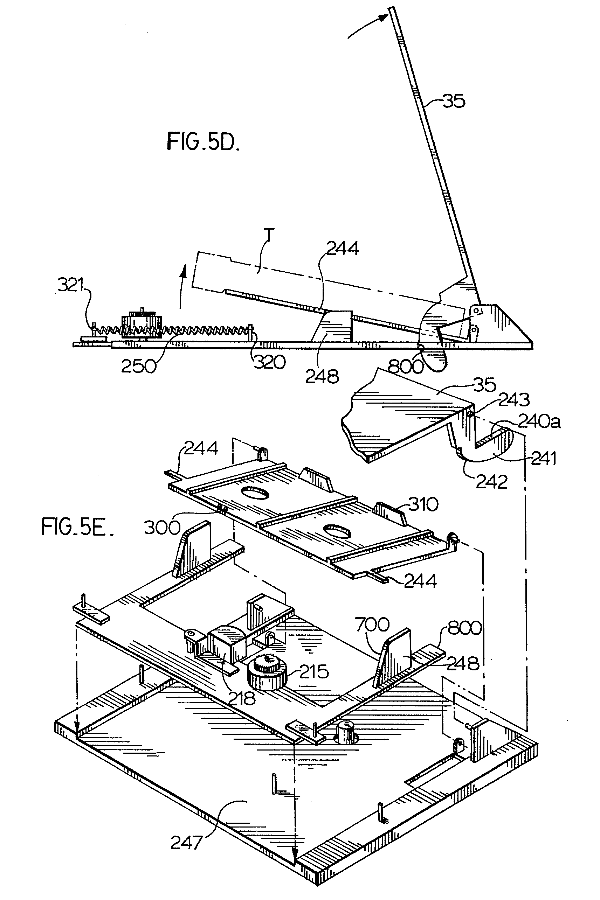

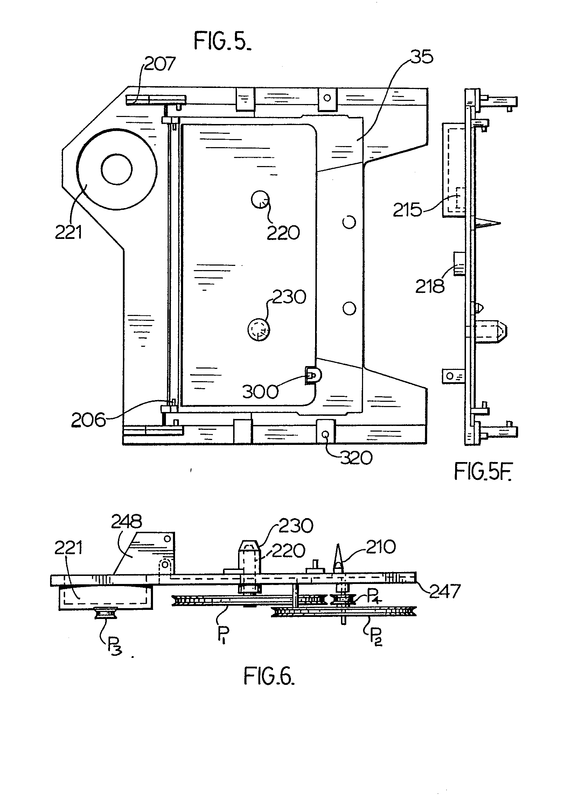

Referring now to Figures 5A through 9, a novel tape player structure is illustrated in perspective, exploded top, side and front views, wherein tape player 200 is shown having a top, bottom, front, rear, and two sides and having disposed upon its top a dust cover 35 pivotable in relation to the tape player 200 upon pins 243 formed upon the sides of said dust cover and extending laterally away from the sides thereof. A drive motor 221 is disposed below the bottom of said dust cover. The drive motor 221 is installed upon the top of the bottom 247 of the tape player 200 at the rear thereof, said motor having a drive pulley disposed below the bottom 247 to which a drive belt can be attached to drive the tape player in conventional manner. The tape player has disposed upon its bottom in co-planar relationship members 245, 246 and 247, wherein portion 247 remains stationary at all times, and member 245 is resiliently biased and pivotable in relation to said bottom member 247 and the top 35 and member 246 is resiliently biased and slideable in a direction laterally away from said motor 221. Member 245 may be resiliently biased at point 300 said biasing means being attached below member 247. Member 245 also has stops 310 mounted thereon. Resiliently biased member 246 has connected thereto stereo read head 218, and drive wheel 215. Member 246 is resiliently biased by biasing means 250 connected at points 321 on member 246, and point 320 on member 247 or any alternative fixed point to anchor the member. Arcuate portion 248 is disposed upon top of member 246 extended upwardly away from member 246. Pulleys $P_1$, $P_2$, $P_3$ and $P_4$ are disposed upon the bottom of member 247, each set of pulleys being co-planer in relation to one another, $P_2$ and $P_3$ and $P_1$ and $P_4$, respectively, whereat a drive belt extends about each pair to provide the motivation to drive drive spindle 220 via pulleys $P_1$ and $P_4$ and drive wheel 215 via pulleys $P_3$ and $P_2$.

For operation in use motor 221 will be started and stopped by motor control 130 illustrated in block diagram Figure 2 when the motor is driven, pulleys $P_1$, $P_2$, $P_3$, and $P_4$ will turn driving tape drive spindle 220 and tape drive wheel 215 thereby advancing tape T at a rate of approximately 1. 16 inches per second past stereo read head 218 thereby passing the necessary signals to the game. Tape head 218 is kept engaged against said tape by resiliently biased members 250. When the game is over or another program cartridge is desired, dust cover 35 is raised thus pivoting upon pins 243. In doing so, arcuate portion 241 will abut lateral edges 800 of bottom member 246, whereupon is mounted drive wheel 215, and stereo head 218. As dust cover 35 is pivoted and arcuate portions 241 abut edges 800 of member 246, continued raising of dust cover 35 forces bottom member 246 laterally away from said motor 221. It is of course understood that the tape player motor 221 is not energized at this time. Further, as member 246 is slid laterally away from drive motor 221, arcuate edges 242 prevent the resiliently biasing means from returning said member 246 to its normal operating position until such time as dust cover 35 is closed. Movement of member 246 in a direction laterally away from said motor 221 will cause member 245 to pivot in the same direction as member 35 due to the raising of front pins 244 upon tapered edges 700 of member 248 disposed upwardly away from member 246 yet affixed thereto. In doing so member 245 will pivot thereby effectively presenting the tape for removal or ejecting the tape from co-planer relation with the tape player upon the drive spindle 220, to a skewed position thereto. Member 245 may be locked in its most upward pivoted position by providing notches (not shown) upon the tops of members 248. Member 35 may have feet 240a) further assisting the upward locking of dust cover 35.

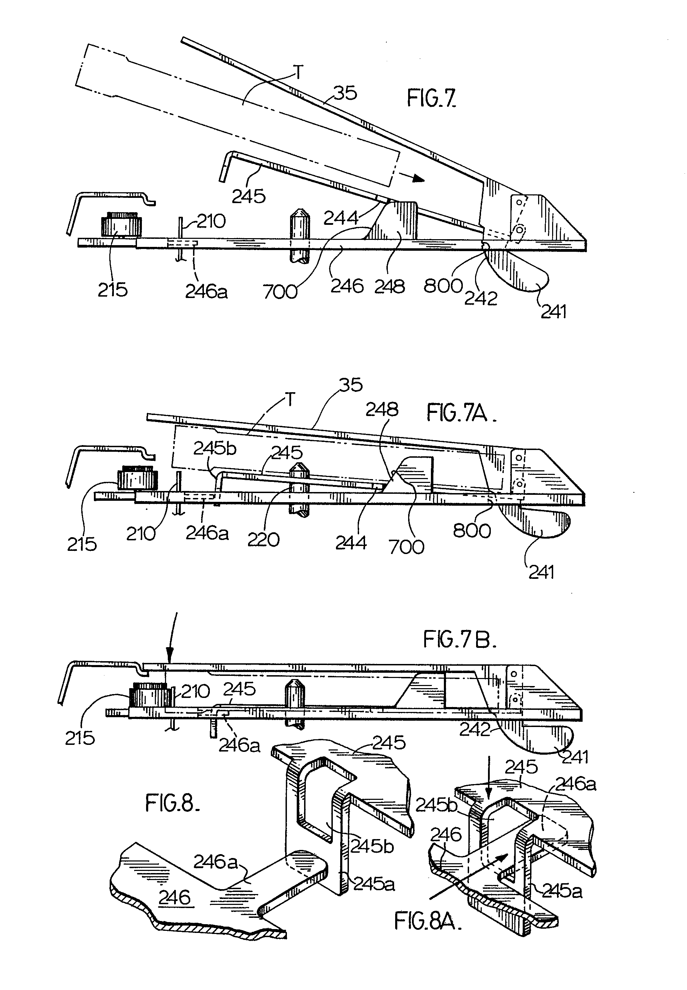

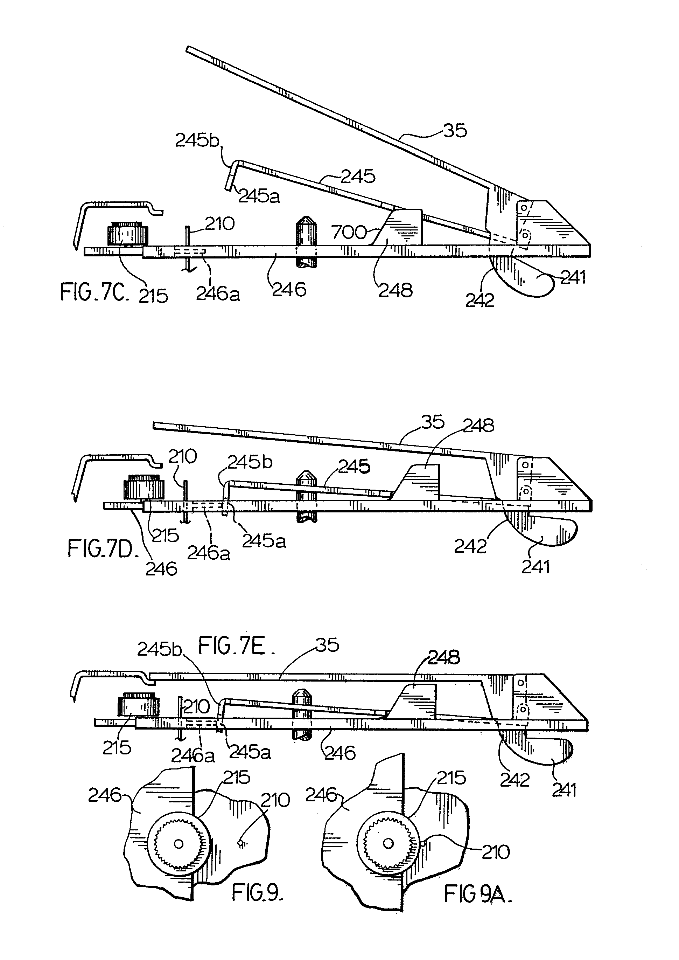

Referring to Figures 7 through 7B closing of the dust cover 35 will of course reverse the process as a new tape is inserted for example abutting member 245, and member 245 carries the tape down to spindle engagement as arcuate portion 248 is slid towards motor 221 urged by resilient biasing means 250 which in turn returns members 246 to a position of normal operation as arcuate portion 241 is pivoted so as not to interfere with member 246. Hence tape head 218 and drive wheel 215 will be returned to normal operating position proximate capstan 210 and the tape player 200 is ready for use by game 10.

Referring now to Figures 8 and 8A, a unique alignment system is presented wherein portions upon the member 246 engage with a slot disposed within member 245 wherein when such alignment occurs, then the tape head 218 and the drive wheel 215 will be in their predetermined operating position as best shown in relation to Figure 7B. Therefore, in Figure 8 is found a tongue 24.1G extending laterally away from the member 246, said member 24.1G being of a sufficient length to reach into opening 245B formed within member 245. Said opening or slot 245B has a portion which is substantially parallel to the extension of member 245 and has a portion which is, in essence, generally normal to the extension of member 245. The portion of the opening 245B which extends downwardly away from member 245 is disposed within a portion 245A extending downwardly away from member 245.

Referring now to Figure 8A, it can be seen that when the tongue is properly aligned with the groove 24.1G and 245B respectively, then the operating portions of the cassette mechanism will be as aligned and illustrated in Figure 7B.

Referring now to Figures 7C through to 7E, a sequence of positions for the dust cover and member 245 and member 246 is presented illustrating what happens when the member 245 and member 246 are not properly aligned. In the past it has been found that should these two members not be properly aligned, then the read head 218 will further not be aligned with the appropriate tracks, providing incorrect audible tones to the microprocessor and thus prevent playing the game properly. In order to prevent such misalignment, and as described in the relation to Figures 8 and 8A, the tongue 246A is illustrated in Figures 7C through 7E, being in initially a withdrawn position from opening 245B through to a position where the end of the tongue remote member 246 abuts the bottom portion of portion 245A but does not enter the slot 245B, unlike the sequence of Figures 7 through to 7B. By allowing for such misalignment, it can also be seen that the drive wheel 215 will remain remote the capstan 210 by the predetermined portion or length of the tongue 246A. Further, drive head 218 will remain remote the tape T the equivalent portion or distance. Thus it can be seen that even though member 245 may indeed carry a tape to its resting place, should for some reason the tongue 24.1G not enter the slot portion 245B, then it will be impossible to play any signals from the tape T. Such a precaution will prevent any damage occuring to the read head or the drive wheel.

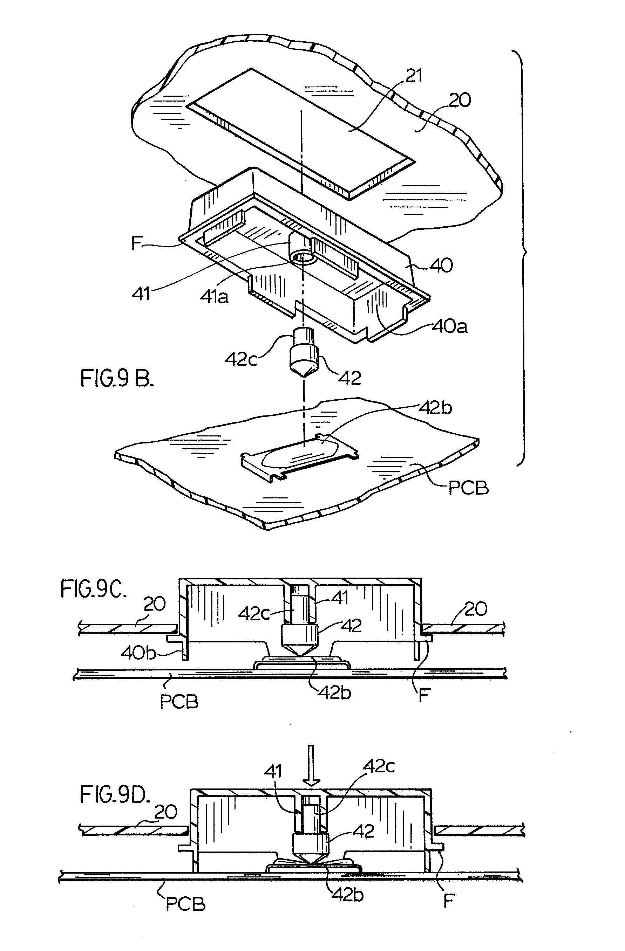

Referring now to Figures 9 and 9A, the location of the drive wheel 215 in relation to member 246 is illustrating the position of Figure 9 wherein the drive wheel is remote capstan 210 and the position of Figure 9A when the drive wheel is proximate the capstan 210. This, of course, can only occur if the tongue portion 24.1G is aligned with the slot 245B and enters therein.

Referring now to Figures 9B through 9D, there is illustrated a preferred embodiment of the response button 40 design and a function thereof. Thus, is found within the casing 20 an opening 21 through which a button 40 is inserted toward the outside of the casing of game 10. The button 40 has a hollow contained upon the bottom thereof disposed therein a hollow cylindrical post 41 having an opening therein 41A. Disposed within the opening 41A is a portion 42C of the rubber bumper portion 42 which is centrally inserted within the central post 41. Thus, it can be seen when the button is pushed downwardly, as best illustrated in Figure 9D, that the rubber bumper will contact the contact 42B and thus not damage the contact. Such an embodiment of the buttons thus allows for prolonged life of the contact 42B found upon printed circuit board PCB. The bumper 42 is manufactured from a resilient rubber which provides a springing action for button 40 but yet providing a firm contact therefor. A flange extends about the perimeter of the button 40 and about the hollow thereof 40A, said flange for prevention of the button from passing or slipping through the casing opening 21. Portions 40B have been provided at the bottom of the opening 40A to limit the movement of the button 40 when it abuts the printed circuit board as best illustrated in Figure 9D.

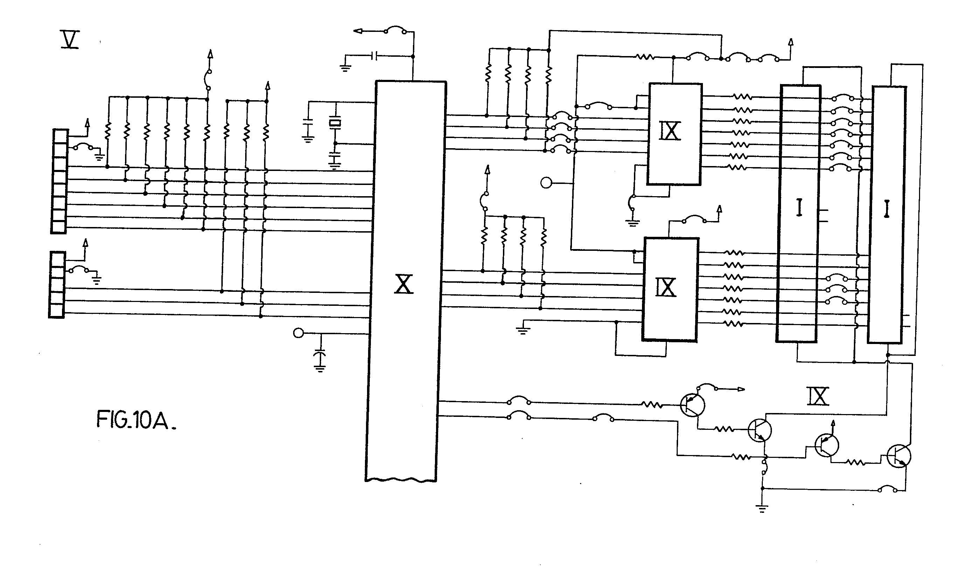

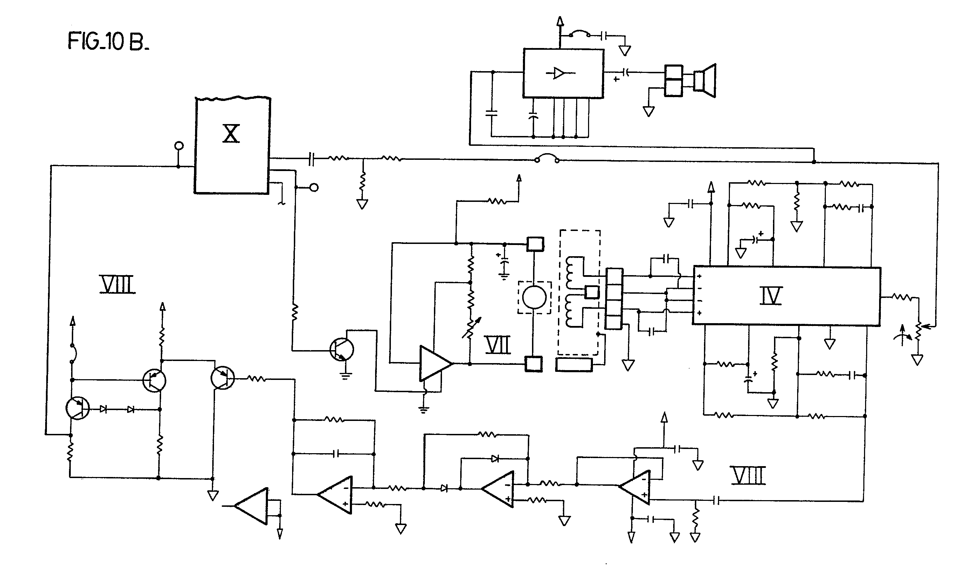

Referring now to Figure 10A through 10C, the electronic circuit embodying the schematic diagram of Figure 2 is illustrated in a preferred embodiment of the invention, the contents of which is obvious to a man skilled in the art, and is intended only as an example of one way in which to embody the instant invention. It is not intended that Figure 10 be considered as the only way of embodying the invention, but that it is preferred by the inventor.

Referring again to Figure 10A through 10C wherein a description of the electronic components of the block diagram of Figure 2 and their interconnection to form the circuit is provided therein providing for more exact specification of:

    i) seven segment L. E. D. 's
    ii) discrete L. E. D. 's
    iii) the power amplifier
    iv) the preamplifier
    v) the player buttons, pause button and "wrong"/right buttons
    vi) the power supply
    vii) the cassette motor control and cassette motor
    viii) the cue tone decoder
    ix) the display drive and the binary coded decimal to seven segment decoder
    x) the masked microprocessor and its inputs and outputs
    xi) read head.

With reference to Figure 10A through 10C the following two tables itemize in detail the selected components used in preferred embodiments to assemble the instant invention, it being understood that such a table is provided for example only and no inference is made that only these components will work effectively.

EXAMPLE I - TRIVIA GAME COMPONENTS

| ITEM | DESCRIPTION | MANUFACTURER |
|------|-------------|--------------|
| 1 | Mask Programmed Single Chip Microcomputer (Z8611 PS 8 MHZ) | Zilog Inc. |
| 2 | BCD-7 Segment Decoder (74LS48) | Texas Instruments Inc. |
| 3 | Display Drivers (UDN-2981B, ULN-2069B) | Sprague Electric Co. |
| 4 | Audio Preamplifier (LM1897) | National Semiconductor Corp. |
| 5 | Audio Power Amplifier (ULN-2283B) | Sprague Electric Co. |
| 6 | Cassette Motor Speed Controller (TDA 1151) | SGS Electronic Components |
| 7 | Tone Decoder (NE567N) | Signetics Corp. |
| 8 | Voltage Regulator (LM7805) | National Semiconductor Corp. |
| 9 | 7 Segment Led Displays (MAN6740 RED) | General Inst. Inc. |
| 10 | Clock Crystal (3.58 MHZ XSTAL) | Fox Electronics |

| 11 | 1K OHM Potentiometer | Bourns Corp. |
| 12 | Resistors: | Dale Corp. |
| | 120R, 5%, 1W | |
| | 100R, 5%, 1W | |
| | 1K, 5% ¼ W | |
| | 10K, 5% ¼W | |
| | 56K, 5% ¼W | |
| | 1M2, 5%, ¼W | |
| | 1M5, 5%, ¼W | |
| 13 | Capacitors: | Phillips |
| | 470 PF Ceramic | |
| | 1N0 Ceramic | |
| | 2N2 Ceramic | |
| | 10N0 Ceramic | |
| | 0U1 UF Ceramic | |
| | 1U0/16V Radial Electrolytic | Sprague Electric |
| | 10U0/16V Radial Electrolytic | |
| | 22U0/16V Radial Electrolytic | |
| | 470U0/16V Radial Electrolytic | |
| 14 | 9 V DC Cassette Motor | Unknown |
| 15 | Stereo Playback Head | Unknown |
| 16 | 0.5 W, 8OHM 3 Inch Speaker | Unknown |
| 17 | Plastic Case & Miscellaneous | EMU Plastics |

### EXAMPLE II - TRIVIA GAME COMPONENTS

| ITEM | DESCRIPTION | MANUFACTURER |
|------|-------------|--------------|
| 1 | Z8611 PS 8MHZ - CPU | Zilog Inc. |
| 2 | HCF4511B - 7 Segment Driver | SGS Electronic |
| 3 | ULN-2283B OR ULN-3718M - Power Amplifier | Sprague Electric |
| 4 | LA5537 - Motor Controller | Sanyo |

11

| 5  | LM324PC – OP Amplifier              | National               |
|----|-------------------------------------|------------------------|
| 6  | LM1897N – Pre Amplifier             | National Semiconductor |
| 7  | LM7805 – Voltage Regulator          | National Semiconductor |
| 8  | MAN6740 RED – 7 Segment Display      | General Inst. Inc.     |
| 9  | Discrete LED – LED                  | General Inst. Inc.     |
| 10 | NPN Transistor 2N3904 – Transistor  | General Inst. Inc.     |
| 11 | NPN Transistor PN2222 – Transistor  | General Inst. Inc.     |
| 12 | PNP Transistor 2N3906 – Transistor  | General Inst. Inc.     |
| 13 | 3.5795 MHZ XSTAL – Crystal          | General Inst. Inc.     |
| 14 | 1N4148 Diode – Diode                | General Inst. Inc.     |
| 15 | THBWHL POT (2K5) – Volume Control   | CTS                    |
| 16 | 1K Trim Pot – Variable Resistor.    | CTS                    |
| 17 | 82R, 5%, 1/4 W – Resistors          | CTS                    |
| 18 | 150R, 5%, 1/4 W – Resistors         | CTS                    |
| 19 | 270R, 5% 1/4 W – Resistors          | CTS                    |
| 20 | 470R, 5% 1/4 W – Resistors          | CTS                    |
| 21 | 1K, 5% 1/4 W – Resistors            | CTS                    |
| 22 | 2K2, 5% 1/4 W – Resistors           | CTS                    |
| 23 | 3K6, 5% 1/4W – Resistors            | CTS                    |
| 24 | 4K3, 5% 1/4W – Resistors            | CTS                    |
| 25 | 10K, 5% 1/4 W – Resistors           | CTS                    |
| 26 | 15K, 5% 1/4 W – Resistors           | CTS                    |
| 27 | 56K, 5% 1/4 W – Resistors           | CTS                    |
| 28 | 100K, 5% 1/4 W – Resistors          | CTS                    |
| 29 | 910K, 5% 1/4 W – Resistors          | CTS                    |
| 30 | 1M2, 5% 1/4 W – Resistors           | CTS                    |
| 31 | 47R, 5% 1/4 W – Resistors           | CTS                    |

| 32 | 18R, 5% 1/2 W — Resistors | CTS |
| 33 | 39R, 5% 1/2 W — Resistors | CTS |
| 34 | #NCD 470PF 500 VKY5F TR 0.2LS (470 PF Ceramic Disk 10% TOL) — Capacitor Nic | CTS |
| 35 | #NCD 0 001M 50 VMZ5U TR 0.2LS (1N0 Ceramic Disk 10% TOL) — Capacitor Nic | CTS |
| 36 | #NCD 0.002M 500 VKY5P TR 0.2LS (2N2 Ceramic Disk 20% TOL) — Capacitor Nic | CTS |
| 37 | #NSD 0.1M 50 VZZ5V TR 0.2LS (0M1 Ceramic Decouple) — Capacitor Nic | CTS |
| 38 | #NCD 10M 16FCTR 0.2LS (10M0 Radial Elect 20% TOL) — Capacitor Nic | CTS |
| 39 | #NRM 1.0 M 100K (1M0 Radial Polester Film) — Capacitor Nic | CTS |
| 40 | #NRE 47M 16 FCTR 0.2LS (47M0 Radial Elect 20% TOL) — Capacitor Nic | CTS |
| 41 | #NRE 47M 10 TR 0.2LS (47M0 Radial Elect 20% TOL) — Capacitor Nic | CTS |
| 42 | #NRE 470M 10 TR 0.2LS (470M0 Radial Elect 20%) — Capacitor Nic | CTS |
| 43 | #NCD 15PF 500VKY5F TR0.2LS (15PF Ceramic Disk 10% TOL) — Capacitor Nic | CTS |

| 44 | On/Off Switch (slide) - Power Switch | CTS |
|---|---|---|
| 45 | 11 - Conductor Ribbon Cable (28 AWG) - Connector | CTS |
| 46 | 8-Conductor Ribbon Cable (28 AWG) - Connector | CTS |
| 47 | 2PIN Male Connector PCB Mount - Connector | CTS |
| 48 | 4PIN Male connector PCB Mount - Connector | CTS |
| 49 | High Force Clicket Switch (AMP#62644) - Switch Amplifier | CTS |
| 50 | Button Contact (AMP#62313-3) (Nominal PCB Thickness 0.063") - Switch Contact Amplifier | CTS |
| 51 | PCB Mount Male PIN Jack (2.5mm) - Power Connector | CTS |
| 52 | Jumper Various Sizes - Jumper | CTS |
| 53 | 22MF 16V Tant. Capacitor - Capacitor | CTS |
| 54 | 3V DC. Motor - Motor | CTS |
| 55 | 2 Track Audio Playback Head - Tape Head | CTS |
| 56. | 0.5W. 8OHM 3" Full Range Speaker | CTS |
| 57 | Main PCB - PC Board | CTS |
| 58 | Player Button PCB - PC Board | CTS |
| 59 | AC/DC Adaptor (with 2.5cm female plug) - 9 V 10% 500mA | CTS |

0 268 476

```
            - regulated (0.5 pk-pk ripple

            max @ 500mA)

60          Plastic case + tape transport +    CTS

            miscellaneous screws
```

Referring to a preferred embodiment of the invention it is apparent that a method for playing a game by at least two participants is provided, the method comprising:

a question being provided from subgroups of scoring categories to groups of participants, said question being selected from storage media being ordinary, bonus, or special in designation, said question then being enunciated to all participants;

the first participant to indicate his/her intention to respond to said question signifies his/her intention thereafter precluding the other participants from responding;

a first time period passes within which the indicated participant must reply;

the indicated participant audibly answers the question asked; or

the indicated participant does not answer;

a second time period passes within which the remaining participants may challenge the answer given;

any of the participants remaining challenges the answer to the given question; or

none of the participants challenges the answer to the given question;

if none of the participants challenges the answer to the question, then points are added to the indicated participant's score regardless of whether he/she gave a correct, incorrect, or any answer at all;

determining the correct answer to the question, if at least one of the participants challenges the answer successfully, then points are awarded to the at least one participant and subtracted from the indicated participant's score;

if at least one of the participants challenges unsuccessfully, the points are subtracted from the unsuccessful challenger and bonus points are added to the points already awarded to the indicated participants for the correct answer;

determining the exact scores to be added or subtracted depending on the sub-group to which the questions belong, ordinary, bonus, or special in designation and updating the scores accordingly;

repeating the aforementioned steps for each question until a ranking of participants is determined upon termination of the game.

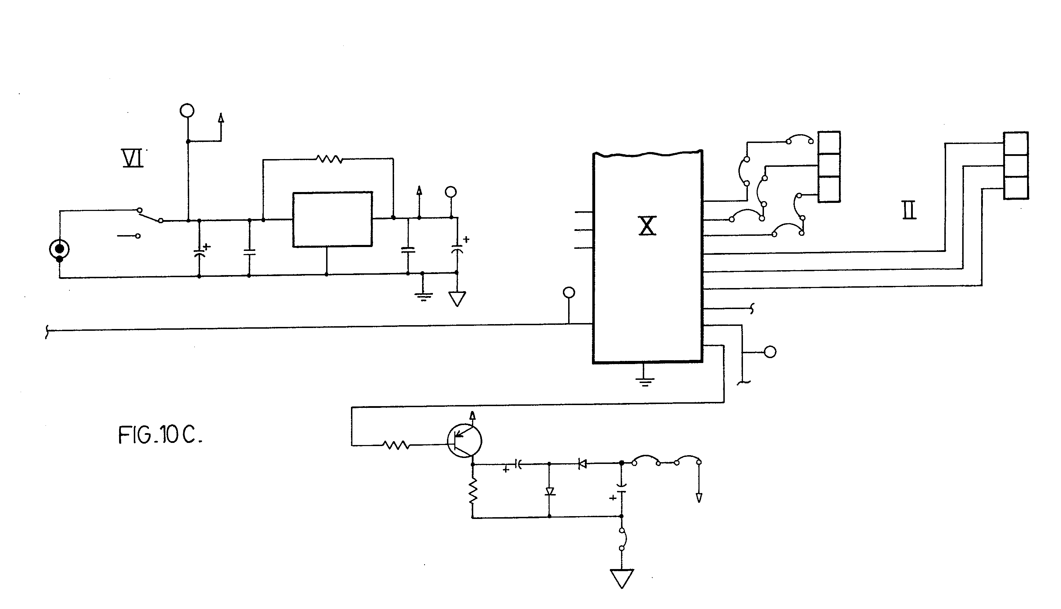

Referring now to Figures 11 through 26, an attempt will be made to explain the sequence of events and the coordination of activities between the game and the players in various modes of and sequences in the game. Referring to Figure 11, the wrong or incorrect response button 51 is pressed to coordinate with the mode of the game sought. As indicated in the seven segment LED, the game will be played in mode 1. The selection of mode 1 is indicated to the game by the pressing of button 50 or the "right" button indicating to the microprocessor that mode 1 will be played. The game then commences by the rotation of the tape in the cassette player and following an introduction which may very well spell out the rules of the game desired a question is presented to all of the respondents. A player D responding to the question depresses his/her button thus causing the discrete LED 85 to light up indicating that that respondent and that respondent alone is entitled to answer that question. It is of course understood and previously described in relation to the Figures 3 through to 4(a) that the team members or the individuals may decide to play in the team mode at either an advanced or a beginner level. Prior to the commencement of the game therefor it is necessary that the button 51 be depressed such that the mode of desired play 1 through 4 as previously described is displayed in the light emitting diode seven segment display followed by the pressing of button 50 to indicate to the microprocessor that that will be the selected mode.

Referring now to Figure 12, following player D's indication that he/she is to respond to the question tape E will stop for a predetermined countdown and in this embodiment 5,4,3,2,1,0. At the end of this period or first elapsed time the respondent must answer the question. If they do not answer the question in this predetermined period then it would be to the advantage of the remaining respondents to challenge the answer in that a correct answer was not presented in the allotted time period. The countdown of 5,4,3,2,1,0 presents itself in the seven segment LED to assist the respondent in answering the question. At the end of the time countdown period a beep is heard emanating from the speaker at G which indicates to all respondents that the period to answer the question is complete and the next time period or the challenge period now begins.

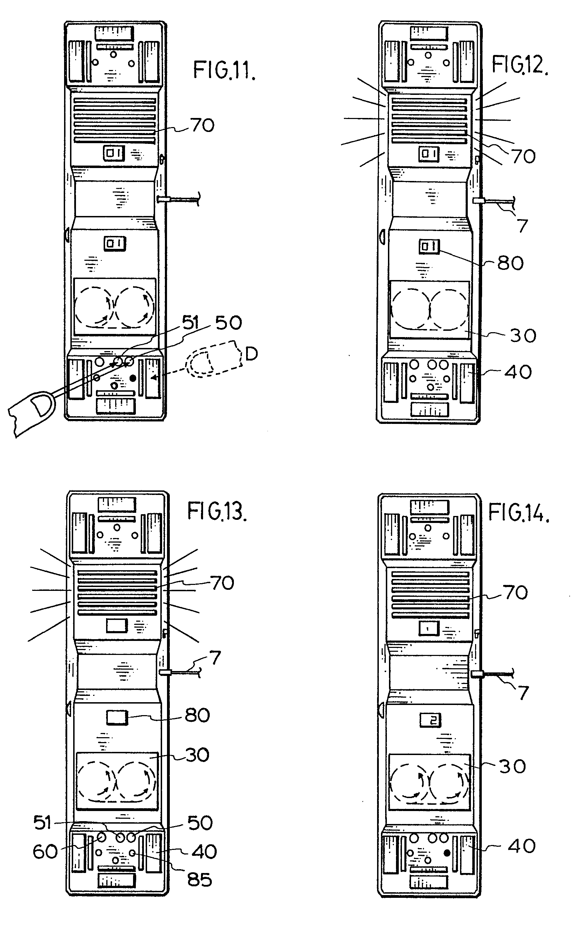

Referring now to Figure 13 it is indicated at H that the tape begins to play again following the initial countdown period and the beep indicated in Figure 12. A further preestablished period is determined in the game to allow the players to challenge the respondent's answer. It is not necessary to challenge. However if a question remains unchallenged then the answer will be assumed correct regardless of its accuracy. For the sake of description Applicant is not indicating a challenge in Figure 13 but a mere beep to indicate or a set of chimes to indicate the end of the challenge period. The tape will continue to roll as it will not be necessary for a pause to indicate to the microprocessor whether the response was correct or incorrrect should the answer have been challenged. Referring now to Figure 2 the point score of 2 points has been credited to player D whose discrete LED 85 is lit to indicate that the 2 represents a score for that particular player.

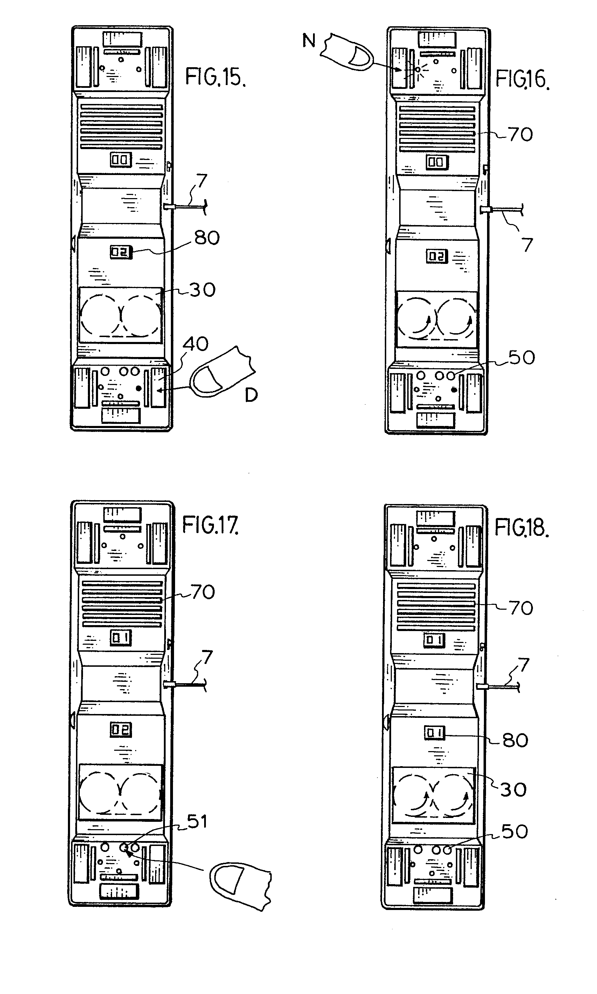

Referring now to Figure 15 we again see a sequence of events from Figures 15 through to 18 following the sequence of events 11 through 14 wherein player D had accrued 2 points to his/her credit. The tape again is played and a question is asked. Player D again responds wherein his discrete LED lights up and all the other response buttons are deactivated. However as is seen in Figure 14, after the appropriate countdown time and during the challenging phase player N decides to challenge at which point his discrete LED 85 begins to flash to signify that he has challenged the respondent's answer. A further time period will pass at which at the end of the challenge period the tape will stop motion as indicated in Figure 14 and will await the input from the participants in the game as to the correctness or appropriateness of the answer presented by the respondent D. Referring now to Figure 17 we have indicated to the game and the microprocessor that respondent was incorrect and thus the challenger was correct whereby pushing button 51 to indicate to the microprocessor that the wrong answer has been given wherein as the tape starts for the next round the score keeping function within the microprocessor will indicate as best illustrated in Figure 18 that 1 point has been accrued to the challenger N and 1 point has been subtracted from the incorrect respondent D, their scores being indicated by the combination of the seven segment LED on the appropriate side of the board in combination with the lighted discrete LED.

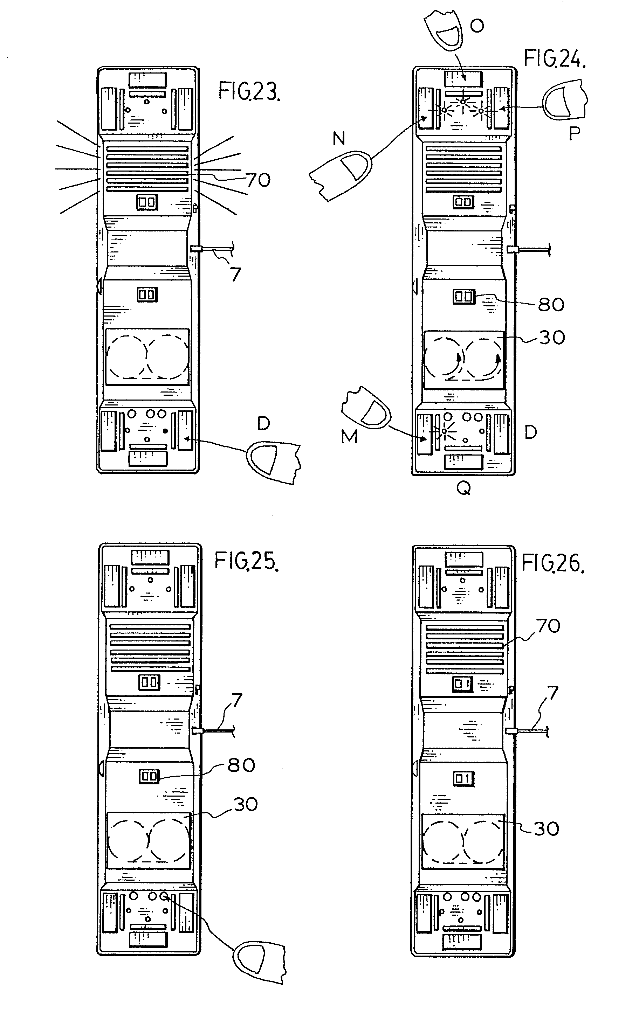

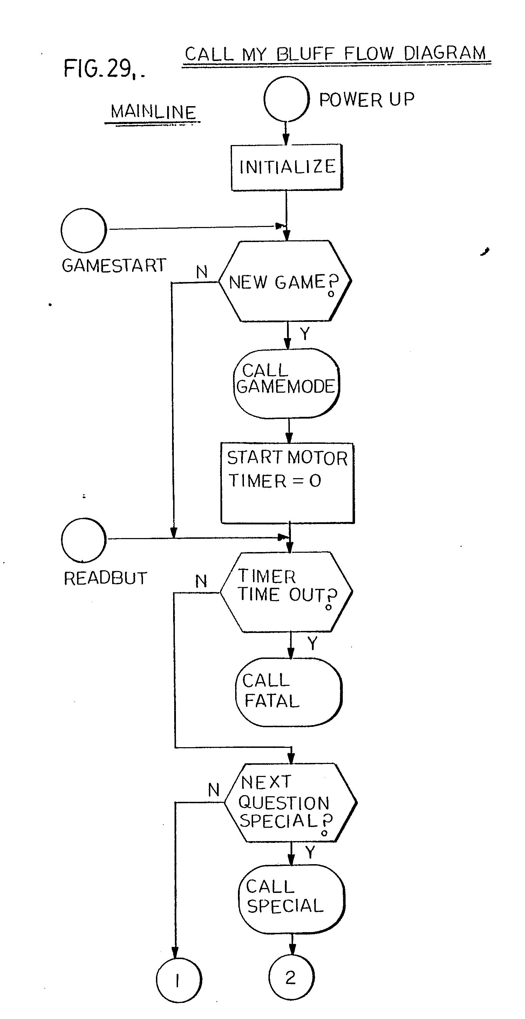

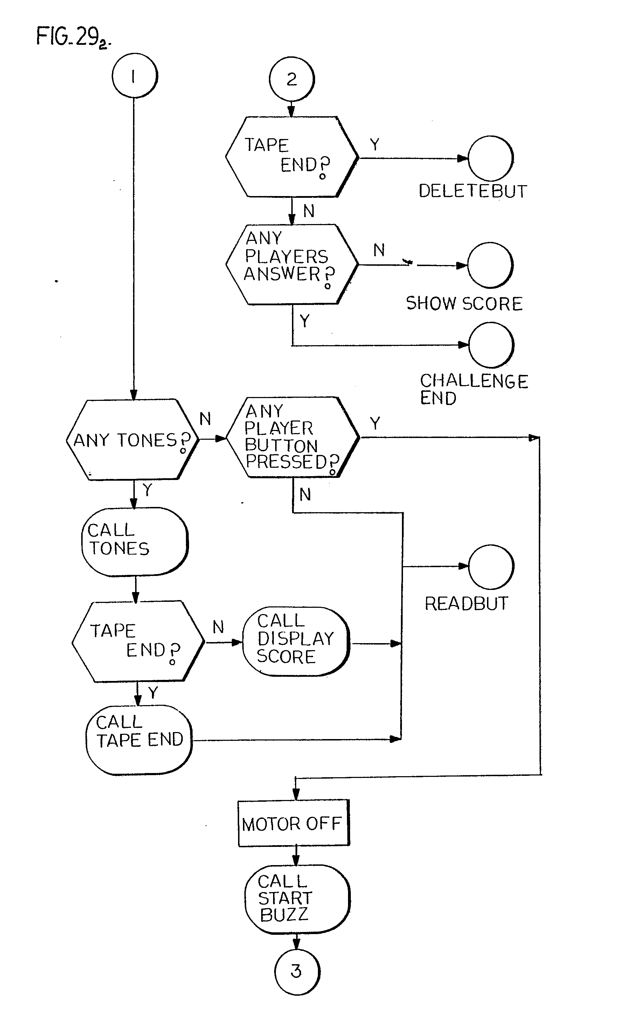

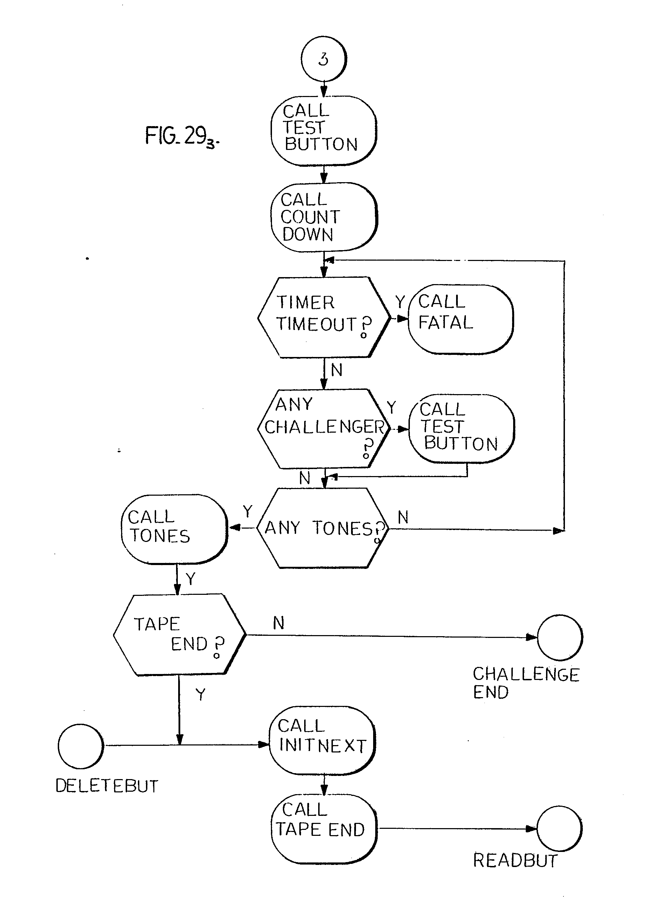

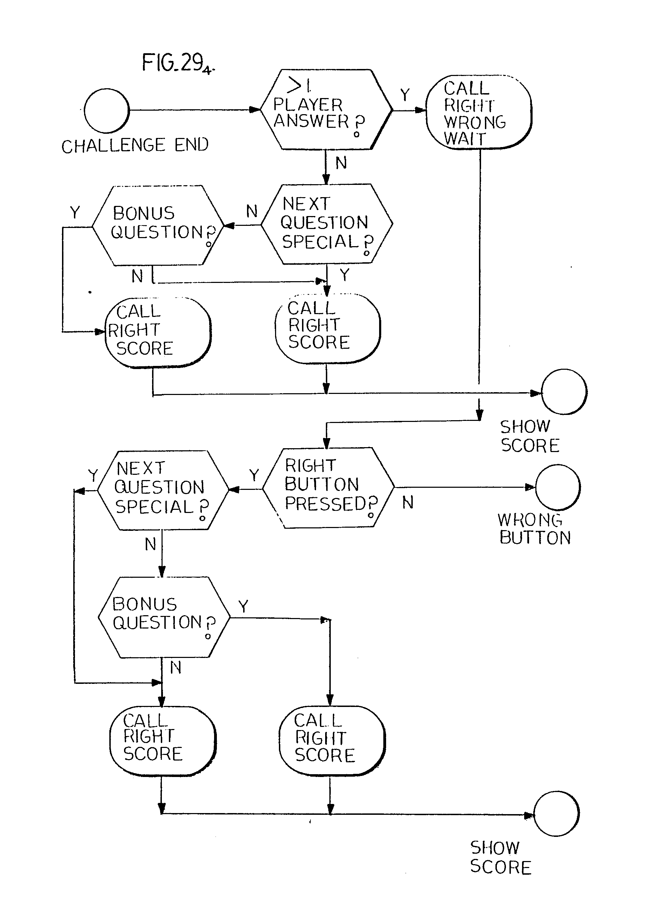

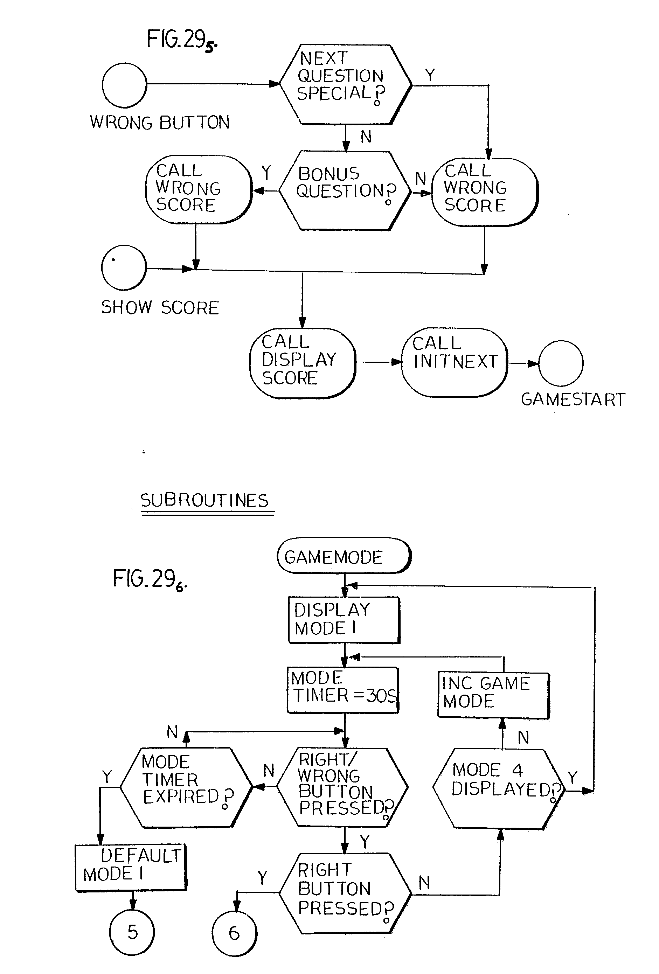

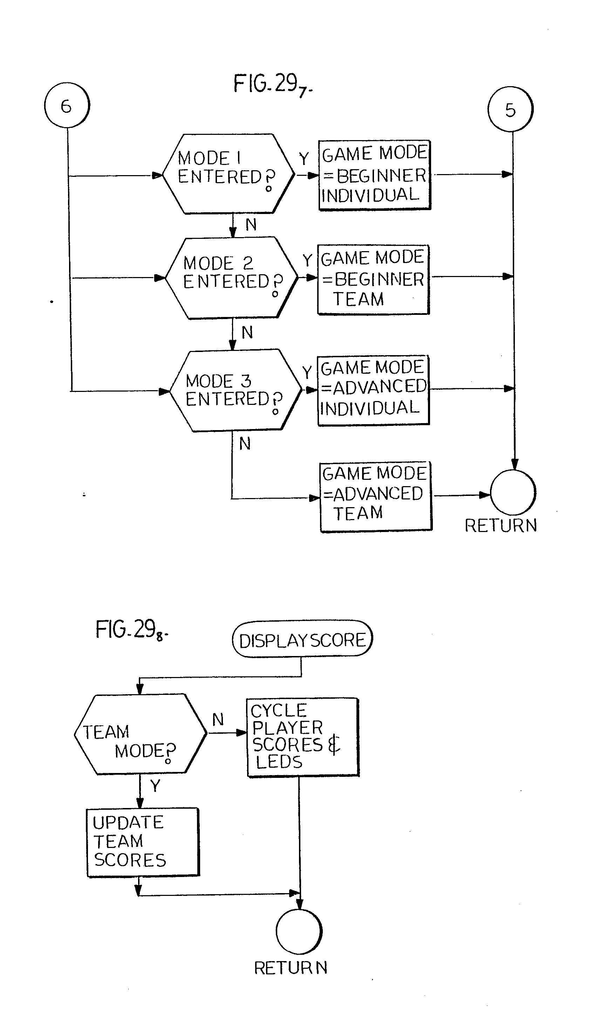

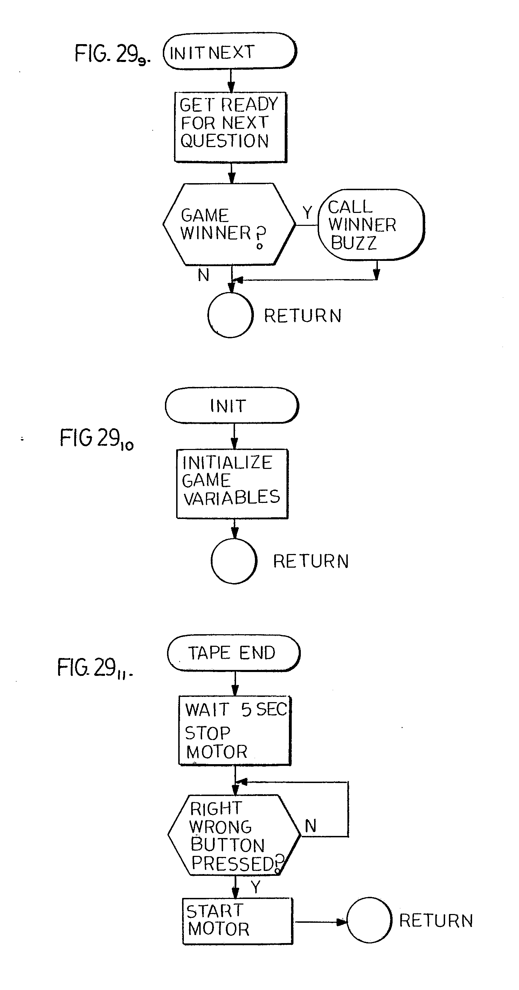

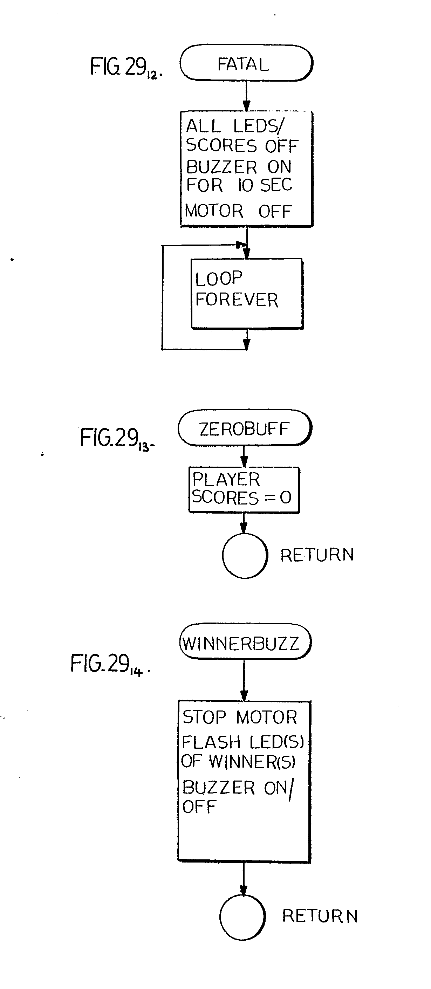

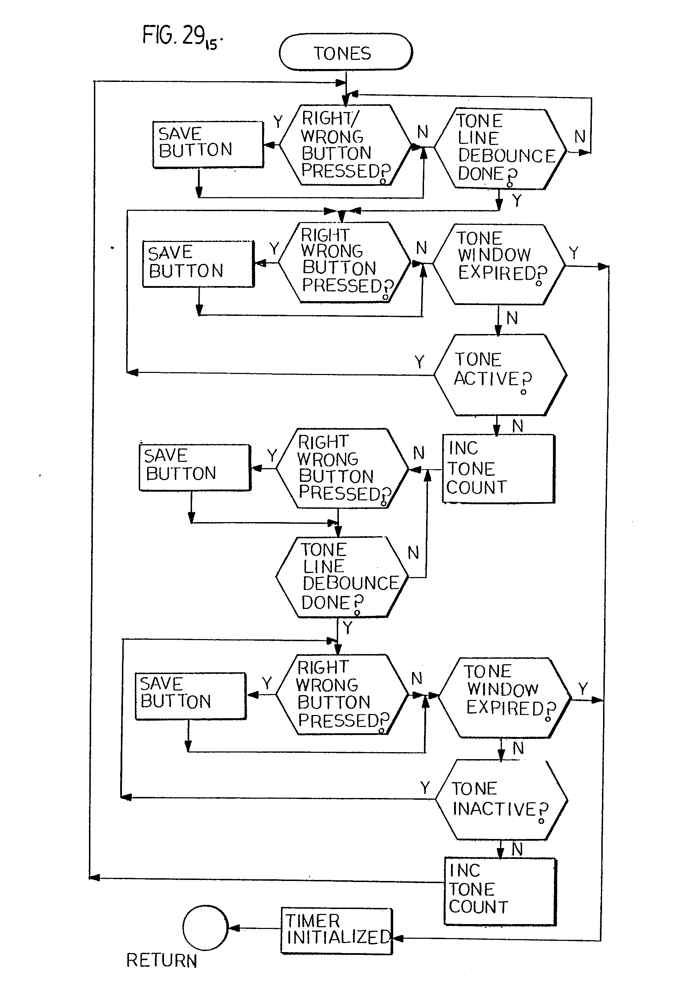

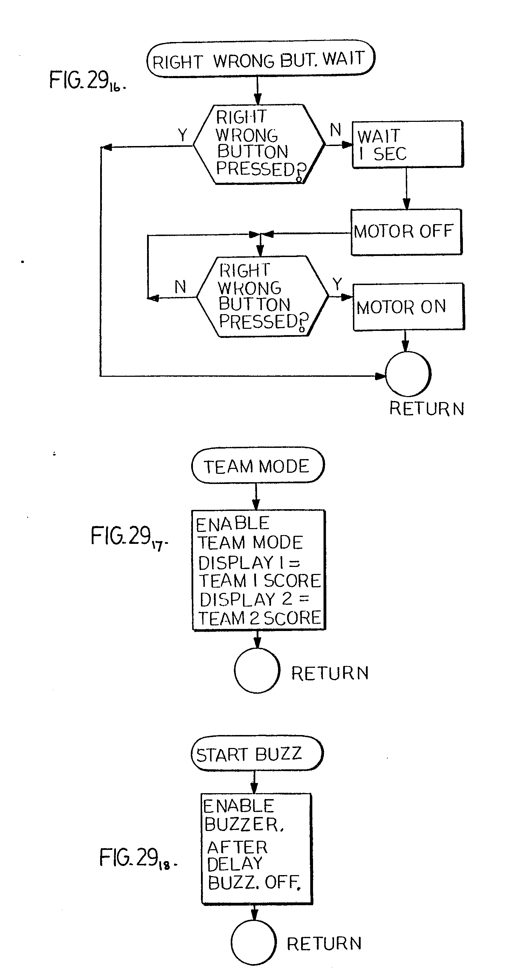

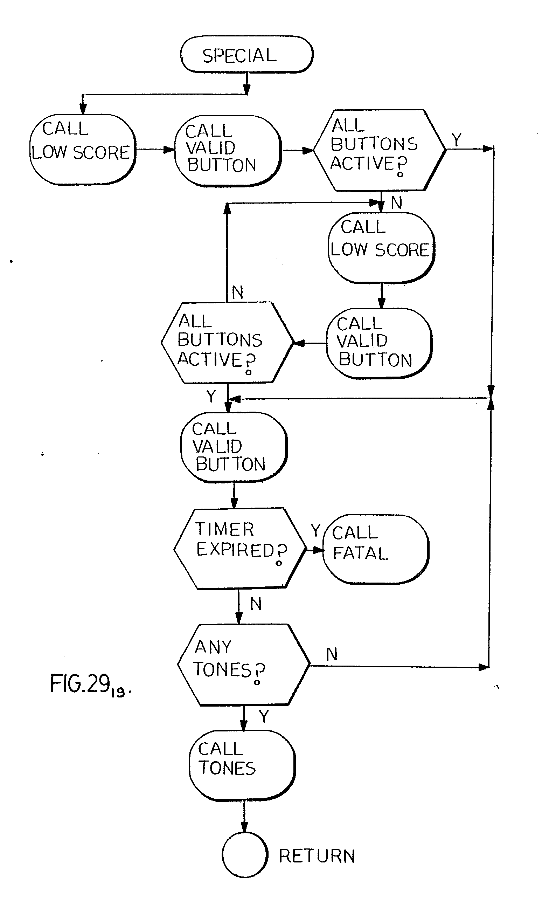

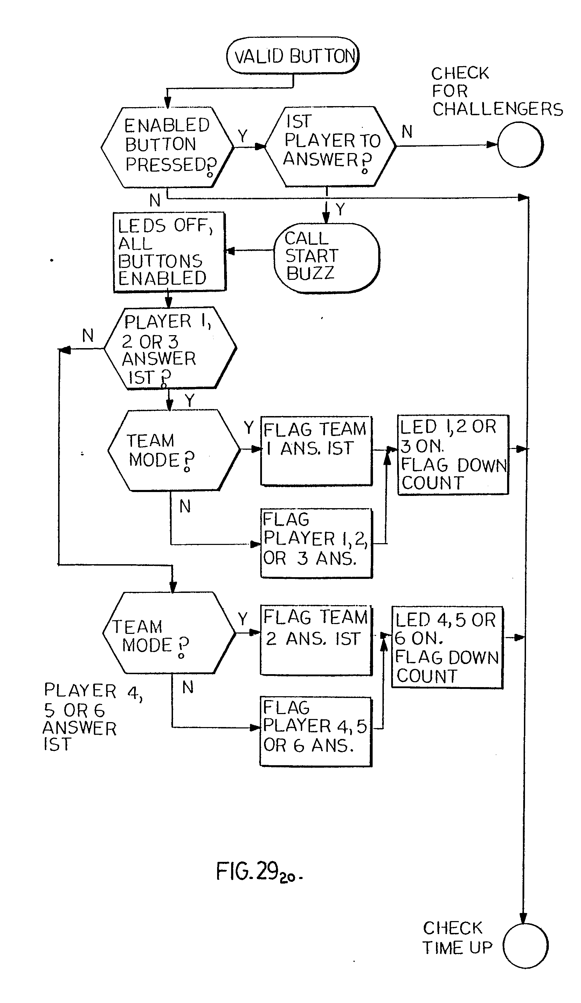

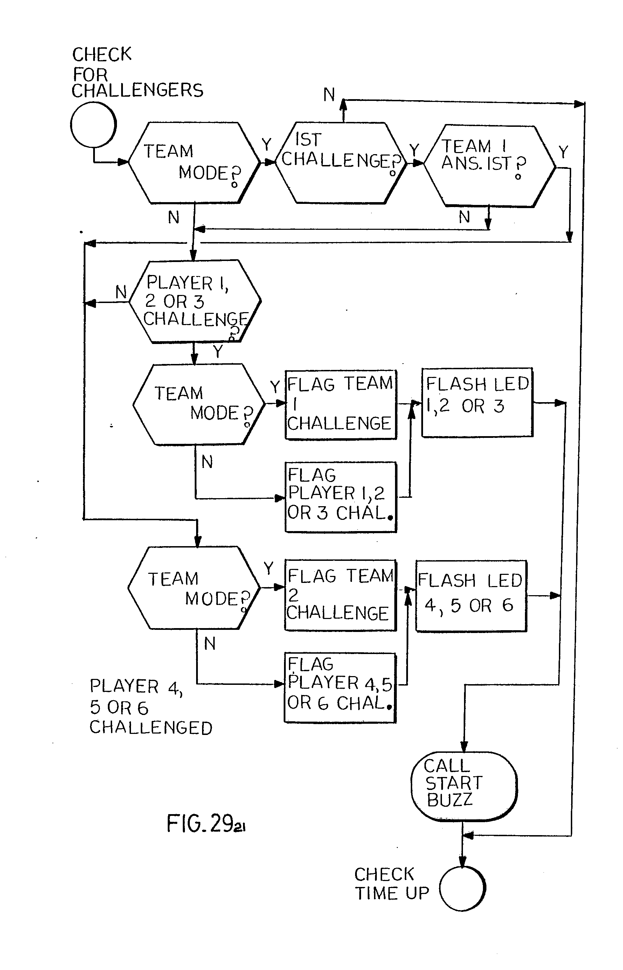

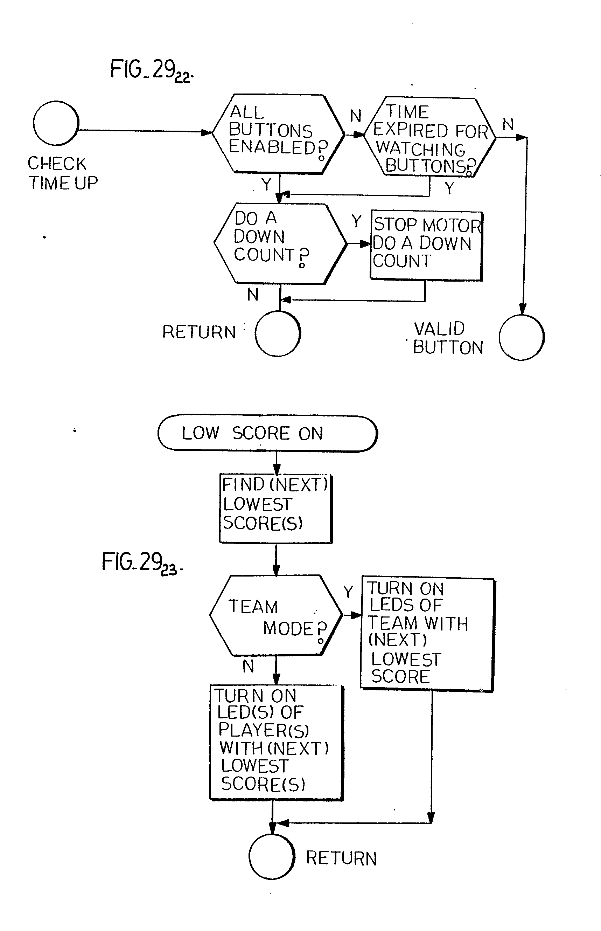

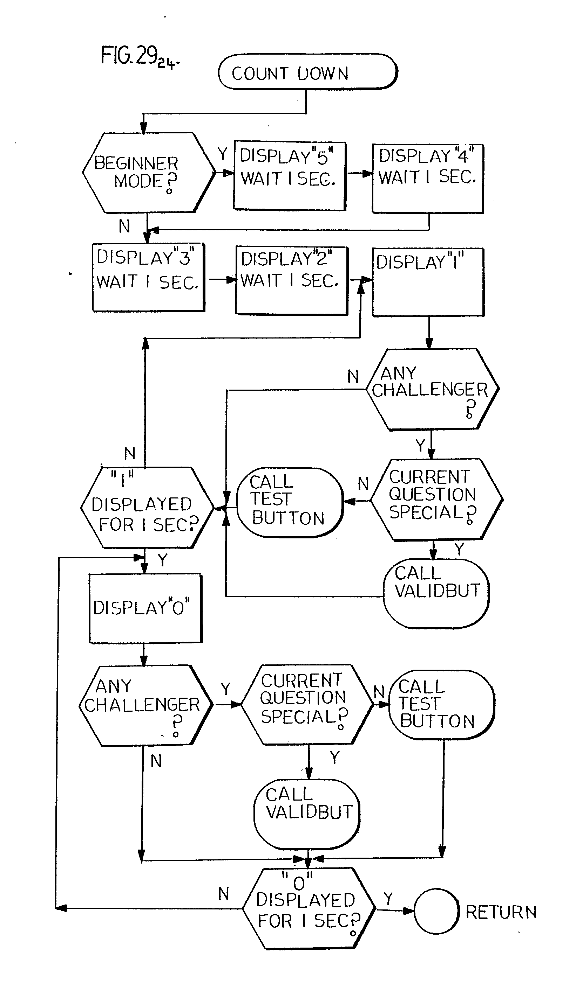

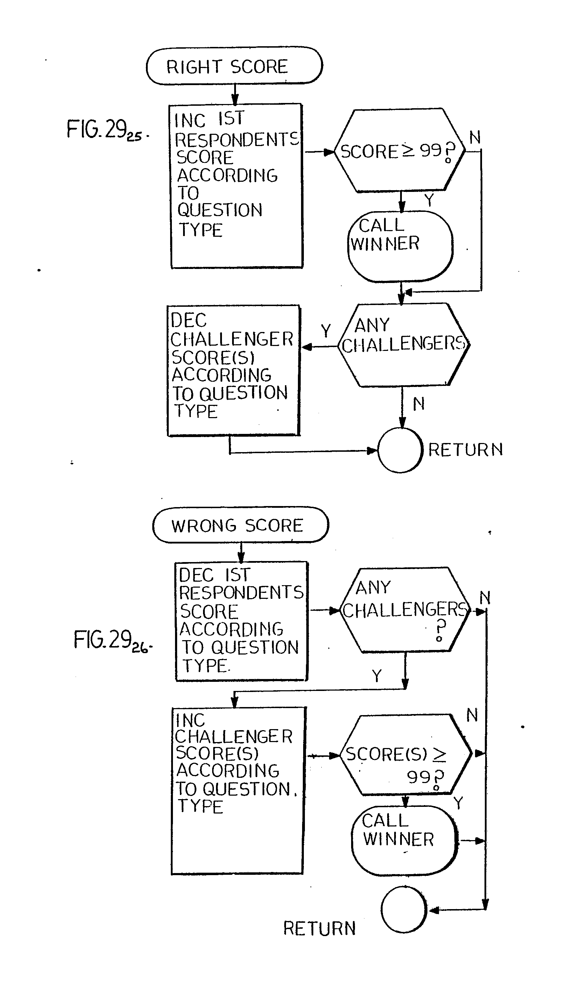

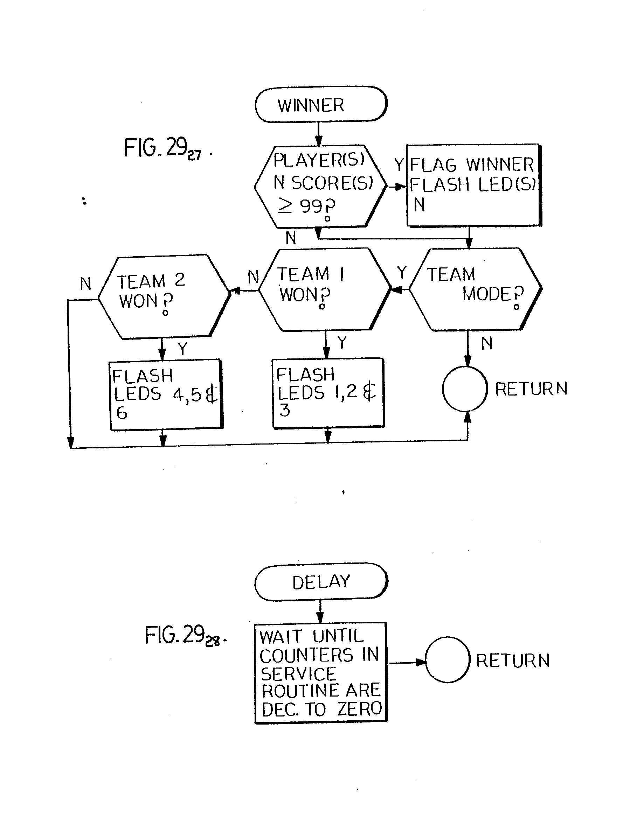

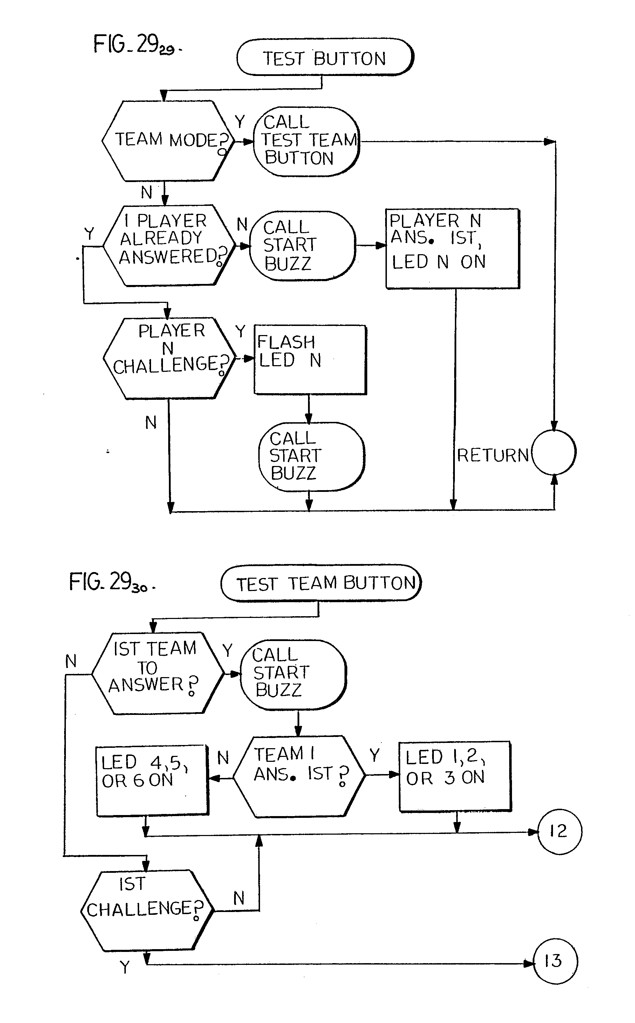

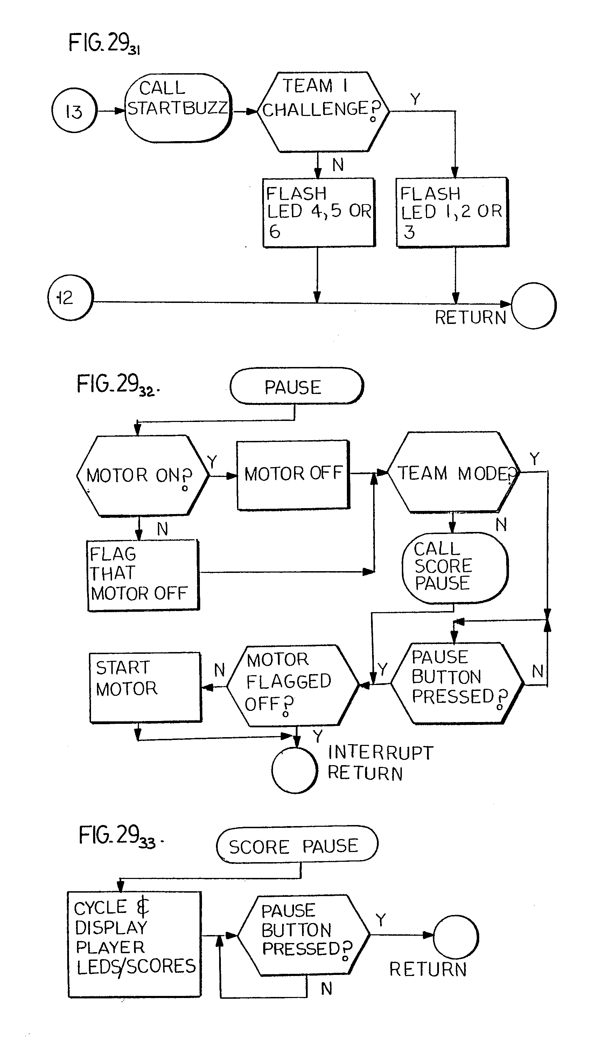

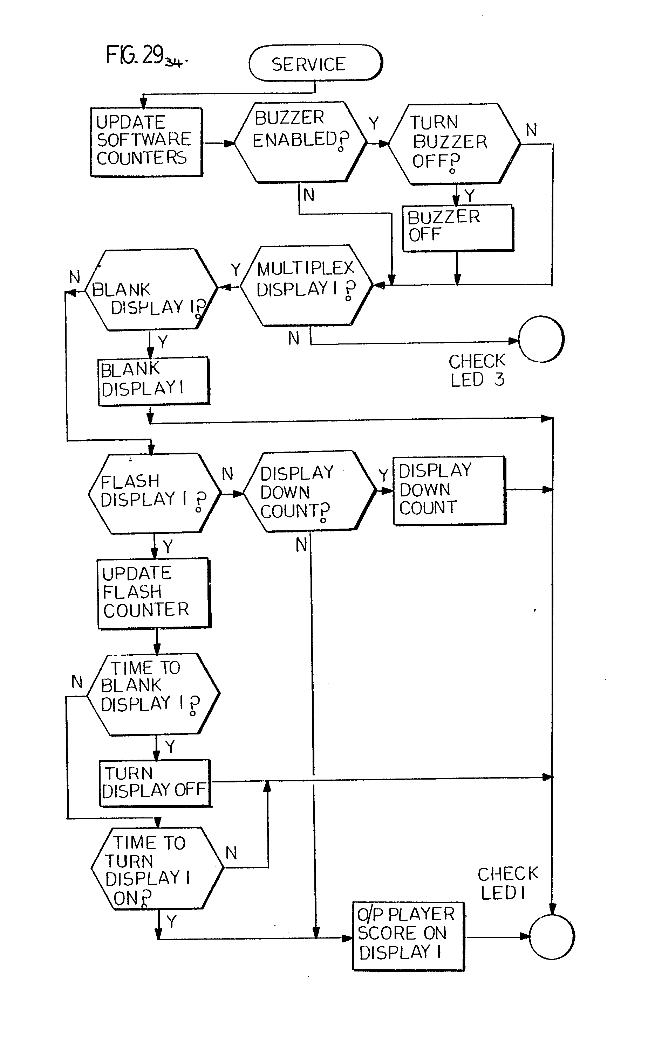

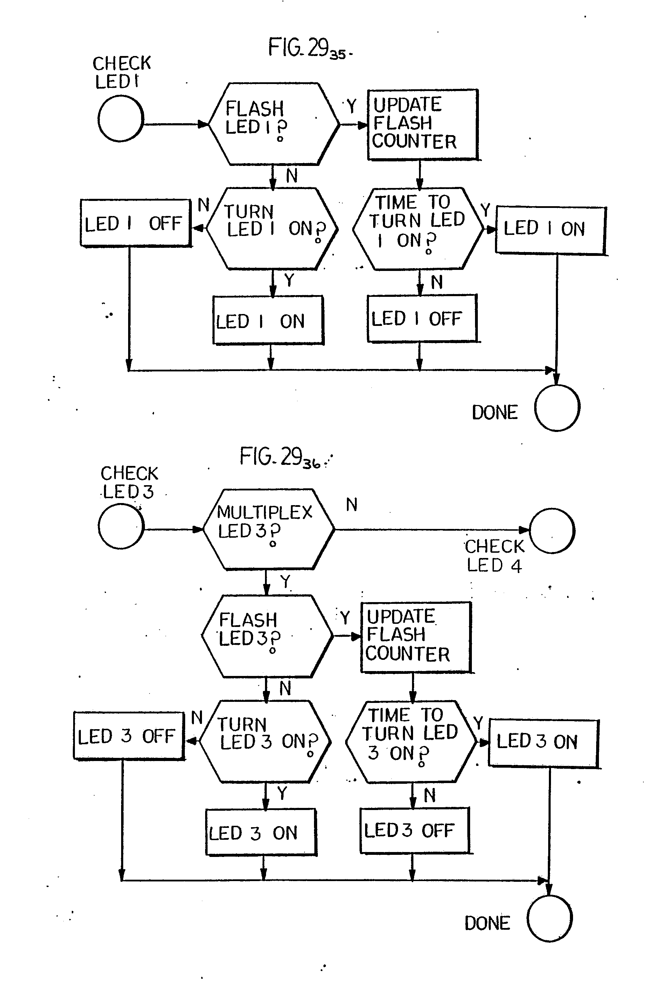

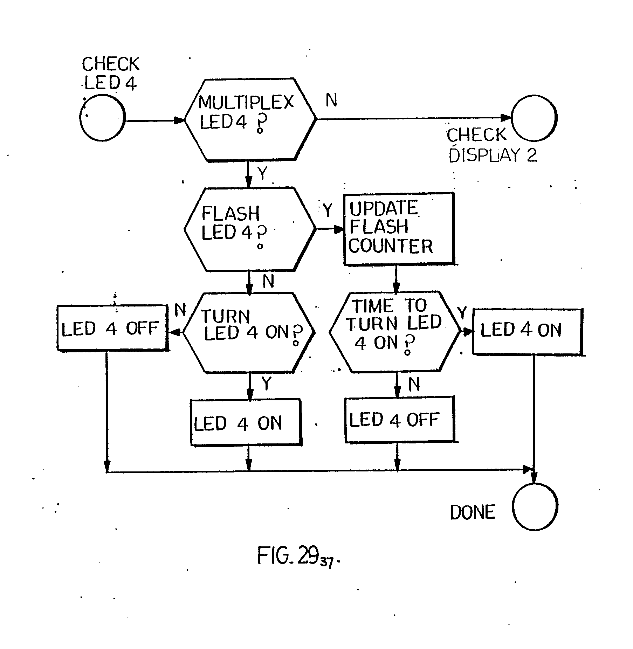

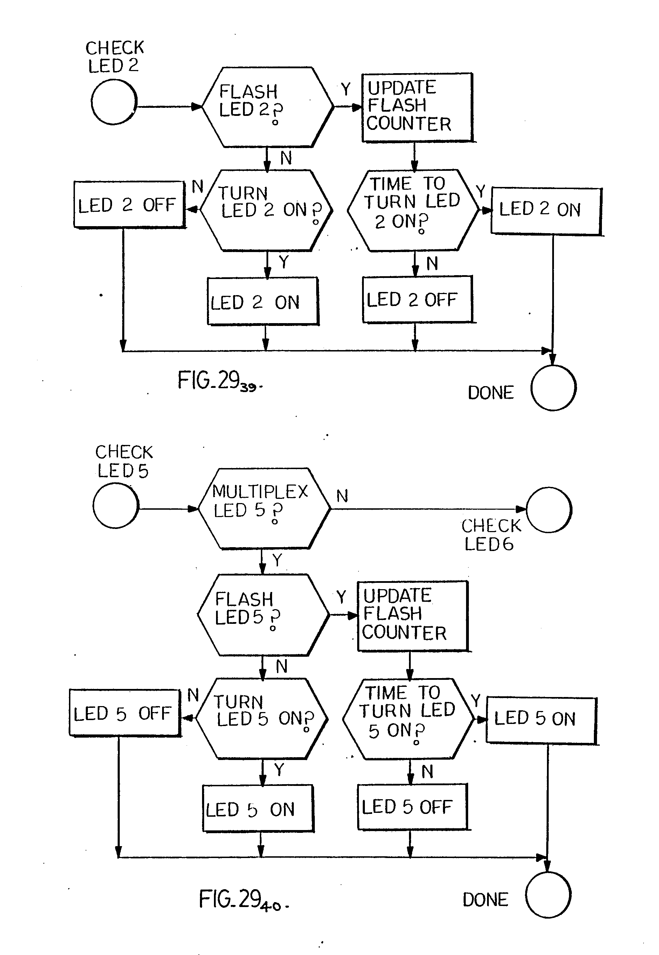

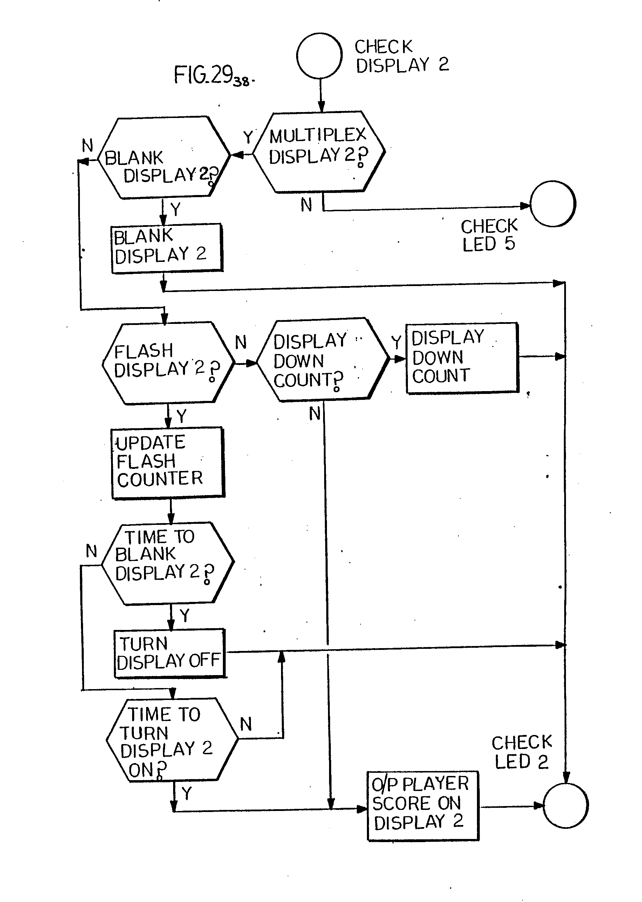

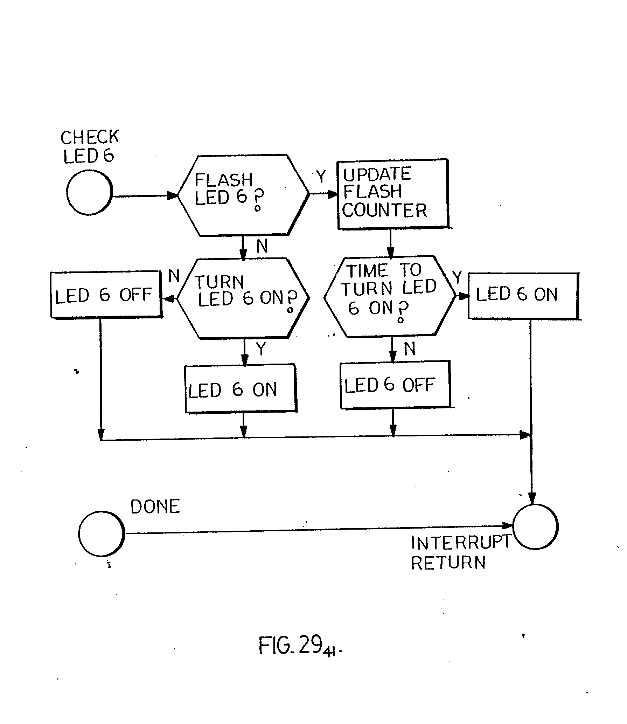

Referring now to Figures 19 through 22 and assuming again we are at the commencement of the game wherein no points have been as yet accrued, respondent D presses his/her response button as previously described, the answer is given in the predetermined countdown period the buzzer sounds to indicate the begining of the challenge period. Referring now to Figure 20, again we have player N challenging the accuracy of the respondent D's answer wherein the discrete LED 85 flashes, the set time period passes and the tape beings to rotate again as illustrated in Figure 29. The tape will continue to rotate throughout the challenge period but pause following the challenge awaiting input from the participants as to the accuracy of the answer given. In this example we are presenting an incorrect challenge wherein the button 50 is depressed to indicate to the microprocessor that the respondent has given the correct answer. Referring now to Figure 22 the game again resumes with another question while the score keeping portions of the microprocessor assign a bonus of 1 point to the 2 points awarded the respondent for the correct answer that was incorrectly challenged. The 2 points is as shown in relation to Figure 14 under a normal nonchallenged score keeping and the figure 3 is applied when an answer is incorrectly challenged. Further if the challenger N had any points whatsoever, 1 point would have been reduced from his/her score to penalize player N for the incorrect challenge. Referring now to Figures 23 through 26 and again assuming that the respondent D has indicated his/her intention to answer the question, the tape will stop for the countdown period as previously discussed until such time as the beep or chimes are heard by all respondents signifying the beginning of the challenge. Referring to Figure 2 it has been indicated at that time during the challenge period that players M, N, O, and P will challenge all of whose discrete LED's are flashing as illustrated in Figure 24. As many players as limited by the structure of the game may be able to challenge during the challenge period, however those which are unsure may choose not to challenge so in any given situation we can have several players challenging and a few players remaining passive. In this example we are attempting to describe a correct challenge and an incorrect response to the question by the respondent D. Referring now to Figure 25 the tape will stop and await for the respondents or participants to indicate to the microprocessor that the response was incorrect and in doing so the game will proceed as in Figure 26 wherein it may be seen that player N and player O having their scores displayed on the seven segment LED in combination with the discrete LED, have accrued 1 point to their credit to their total scores and if the game were allowed to continue to cycle itself to indicate the scores of all participants, such cycling occuring every round and lasting 3 seconds per participant's score, it could be seen that respondent D would not have accrued any points. By hitting the pause button at any point in the game, the game will be paused and then cycled scores indicated for each participant until the pause button is pressed again to resume the game. However if such a round occurred in the middle of a game, respondent D would have 1 less point accrued to his/her score and prior to incorrectly answering the aforementioned question. Such cycling of the use of the seven segment LED's in combination with the discrete LED proximate each response button is best illustrated in relation to the logic as shown in Figure 4(a) of the flow diagram from the microprocessor's point of view.

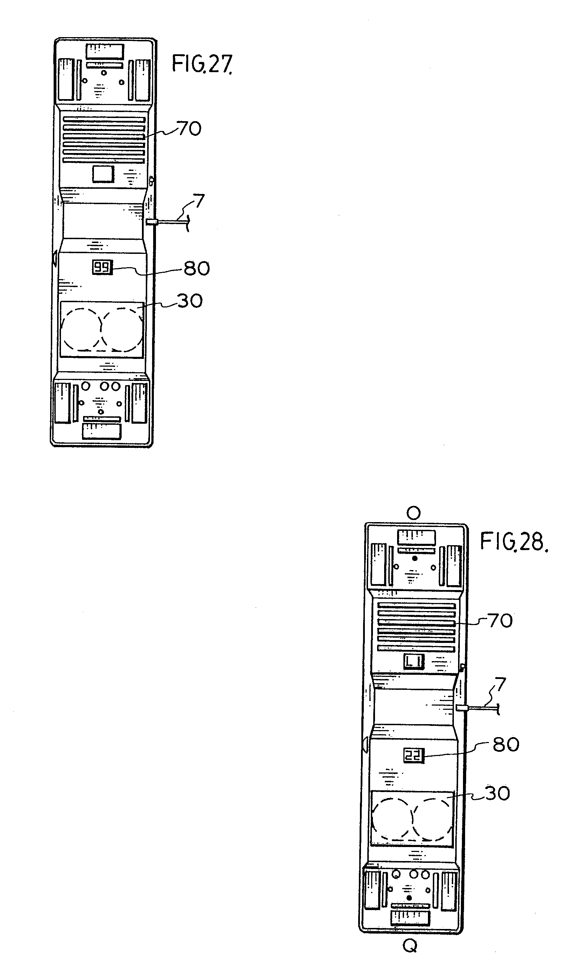

Referring now to Figures 27 and 28 wherein the discrete LED's 85 are lit to illustrate the score of the participant adjacent the response button 40 therefor, in Figure 27 respondent D whose discrete LED is lit has a score of 99 and thus wins the game. Referring now to Figure 28 respondent Q and respondent 0 have their respective discrete LED's lit showing respective scores 22 and 17 for each of the participants. The score keeping function within the microprocessor will cycle through, at 3 second intervals following each question round the respective scores of each participant and thus the participant will wait until his or her score appears in the seven segment LED in unison with the lighting of their discrete LED. Of course it is understood that the aforementioned description is only a preferred embodiment of the invention. In an alternative embodiment of the invention seven segment displays for each of the six participants may be provided. However due to cost considerations in manufacturing the game the combination of the discrete LED's and the seven segment displays is presented.

Referring now to Figures 29(1) to 29(41) the drawings are set out as an expression of the logic used to

16

implement the sequence of events according to a preferred embodiment of the invention. Any man skilled in the art would appreciate the teachings of the drawings and would be able to convert the pattern from one programming language to another.

One of the key enjoyments for participants in the game is the bluffing aspect of the game wherein a respondent to a specific question may for example with an authoritarian posture provide a false answer, but because of his/her confident manner potential challengers are discouraged from challenging the respondent. Alternatively a respondent may provide a correct answer in a insecure manner so as to encourage challenges and thereby accrue bonus points to his/her score. Thus the bluffing aspect of the game adds an emotional interaction or synergy between participants and thus a new dimension to the game beyond the types of quiz games described in the background of the invention.

In a preferred embodiment of the invention the end of a tape side is indicated to the microprocessor by a 10-second continuous tone occurrence which when received by the microprocessor causes the tape motor to turn off expecting the user in turn to turn over the tape and reinsert it into the tape transport. By pressing the appropriate response buttons 50, 51, the respondents indicate to the microprocessor that they are ready to proceed with the game. Should the tape not be inserted back into the game, there is a software countdown of a period of time in which there is an absence of inaudible tones. When this time period is exceeded, the game will shut off. By doing so the game is protected and the motor is prevented from overheating.

In a preferred embodiment the inaudible tones provided on the cassette tape for the microprocessor are 400 hz, providing less bleed through to the audio track because of head alignment or poor duplication of the tape during manufacture. The inaudible tones may be either frequency or amplitude coded, that is the microprocessos will expect a given frequency or a specified amplitude of inaudible tones but not both. Amplitude coded inaudible tones has proven to be more beneficial as previously mentioned, and as will be apparent to a man skilled in the art.

Although we have attempted to describe the game at hand in terms of a compact simple format using an audio cassette, it is equally an aspect of this invention to not limit the aforementioned game nor the method thereof to audio cassettes or audio media. In an alternative embodiment of the invention, the trivia or quiz type game is embodied in a video game similar to those found in video arcades. The participants in such a game not only have the audio portion questions or information presented to them, but also have a multitude of visual information presented to them as well. The visual information takes the form of animated displays and still-coloured pictures. However the method of playing the game is substantially the same.

Thus the components of the game differ in their specific format of application but none the less combine to provide the participants with effectively the same game presented in a different format, and in this case expressed as an arcade type video game which may or may not be coin operated. The game includes a game manager for controlling the game, a compact disk ROM, a disk manager which extracts information from the compact disk ROM when requested to do so by the game manager, a video manager which actively supports the animation and the display of still-coloured pictures read from the compact disk ROM and then audio output section which transforms the digital audio information into a continuous and long signal for real time output to a speaker.

The game manager acts substantially the same as the control means described in the summary of the invention being in the alternative embodiment a Z280 micro computer with an onboard Z80 central processing unit. Four channels of direct memory access, three counter timers, a universal synchronous receiver transmitor and a memory management unit with the ability to address 16 megabytes of memory. The transfer of the video signals is co-ordinated with the video manager which will be described in the following sections. When a picture is required the Z280 microcomputer will request a 64 kilobyte block from the disk manager for direct memory access and transfer this block via an interface into a picture buffer within the local memory. The direct memory access of the 64 kilobytes will continue until the 512 kilobyte picture has been allocated.

The game manager is also responsible for question selection. In order to present questions in random order, a random number generator is invoked at the game startup. Further, in order to locate data on the compact disk ROM and co-ordinate time dependent activities, the game manager has access to a compact disk ROM directory resident in EPROM. This directory contains:

    1. the addresses of audio and picture data blocks for each question,

    2. the number of two kilobyte blocks for audio for each question,

    3. method of scoring, i. e. ordinary, bonus or special,

    4. the time quantities to start or stop the animation, start picture display, wait for wrong/right button response, or enable/disable player buttons.

The game manager communicates with the disk manager and the video manager in order to co-ordinate the output of audio and picture information much the same as the control means for memory storage and microprocessor due in the audio version of the game.

A typical communication of the game embodied as a video game will consist of a request for audio and/or picture data. The game manager will pass to the disk manager a compact disk ROM address and the number of two kilobyte blocks to transfer to the disk buffer. The game manager will then occassionally check the data integrity. When ready the microcomputer Z280 will transfer the data to the appropriate destination via direct memory access. Communication with the video manager will be through the post-interface being a graphics signal processor. A typical communication between the Z280 and the aforementioned graphics signal processor will be as follows: 1. start-stop-question-animation,

2. question category,

3. display picture,

4. start animation for right/wrong button wait interval,

5. perameters for players' scores,

6. display players' scores,

7. start countdown, etc.

and the typical response from the interface to the Z280 microcomputer will consist of: 1. ready to accept next picture,

2. done countdown,

3. etc.

The disk manager consists of a Z8681 microcomputer, a compact disk ROM drive, a two port 64 kilobyte disk buffer in the local memory. The disk manager is responsible for retrieving data from the compact disk drive and storing it in the disk buffer. Addresses, commands and status flags are transmitted in between the host and disk manager via two-ported memory mail box structure.

The audio output section is responsible for converting the digital audio data into an analogue way form for output to a speaker. Real time audio is created by reading the buffer at a constant rate and passing the data through a digital to analogue converter, low pass filter and amplifier. Of course such a technique is well known in the art and it would be apparent to a man skilled in the art.

The video manager is responsible for providing animation and picture display for the video game. It consists of a graphics signal processor, local program space, an 8 bit or pixel animation buffer, a 16 bit or pixel picture buffer, an animation palette, an picture digital to analogue converter and a CRT. The screen resolution for the picture and animation displays will be 512 pixels by 480 lines. The local program space is used for temporary picture storage and programs, data, etc. The 8 bit or pixel animation buffer is used by the interface to provide a real-time animation until such time as the 16 bit pixel picture buffer is used to display pictures. The picture buffer implements 5 bits for red, 5 bits for green and 5 bits for blue for a total of 15 bits of colour information or 32,768 on-screen colours. The animation buffer implements 256 on-screen colours from a palette of 16. 7 million. The need for different buffer sizes is a compromise between picture quality and animation speed.

The software or logic used to drive such a video game may be very similar in format to those as presented in Figures 29(1) through 29(41) although the mechanisms presented in Figures 2 and 10 will be considerably different. For example, a possible structure of the animation software divides the task into:

1. A command interpreter responsible for a post to interface communication. The interpreter would receive host commands and invoke the appropriate animation, countdown, score update sequences, etc. It would also signal the host, i.e. the game manager, at the occurrence of certain events that it was ready for the next picture countdown, etc.

2. The animation routines. There would be an animation routine for each general question category. That is to say that if the category were geography, it would be appropriate to have a spinning globe of all the necessary artwork to make it look professional or if the question were on wine or spirits, the bottles of popular brands may be shown being poured or consumed.

3. The animation would be fed out in detail within the picture buffer mapping routines as would the picture requirements be set out in detail in the animation buffer mapping routines.

4. There would be of course a player countdown.

5. The need to display updated player scores.

6. The animation picture transition routines would be set out, i. e. those routines implementing fading in and fading out from one picture to another, zooms, etc.

The functions carried out and initiated by the game manager would include the start of the animation, the start or stop of the animation, the animation type, the picture display, player countdown, displaying players' scores and the animation within the right/wrong button wait interval. The interface will signal the game manager when the picture buffer is free and the countdown is complete. The aforementioned paragraphs describe an alternative embodiment to the instant invention. However, any video presentation of the game need not be limited to the use of a compact disk but may also be embodied within a hard or floppy disk, within a video disk or within a video tape. The compact disk player however was selected because of its ability to store great deals of information as well as its durability. One drawback is of course that in using the compact disk as a read only memory that the device will not normally be accessible and will only be available for maintenance by qualified technicians.

However, to the participants of the game, whether the game is played in audio or video and audio format, the play of the game will be very similar. Both the video and audio concepts will pose trivia questions to players in the preferred and alternative embodiments with the advantage that the video game will present still pictures and computer graphics wherein the audio game cannot. Where a preferred embodiment presents audio cassettes for the sequential storage of questions and synchronization tones, however, the video presentation of the game uses a compact disk player for storage of audible and video materials. The compact disk will be controlled by the game hardware and provide random access to its contents. Thus each time the game is played, a different set of questions will be presented to the game players unlike that set of questions found on the audio tape which are sequential and are not changeable. Synchronization of the game will not be by tones but will be accomplished with the use of a clock. Also unlike a preferred embodiment of the game where the

18

user can change cassette tapes, the compact disk player will not be accessible. A display of the visual information will be by a colour monitor either separately or integrated with the actual game. The CRT will be mounted horizontally surrounded by 6 player buttons, a right/wrong button and a pause button. Players will be seated around the game during the play of the game.

As many changes can be made to the preferred embodiments without departing from the scope of the invention; it is intended that all matter contained herein be interpreted as illustrative of the invention and not in a limiting sense.

## Claims

1. A game comprising:
    (1) control means to co-ordinate the playing of said game;
    (2) score keeping means to calculate scores, retain total scores and assign scores for all participants;
    (3) time counting means to account for the passage of time within said game;
    (4) a plurality of response means, one for each participant, each response means to be activated by a participant to enable the control means to recognize that a participant has responded;
    (5) input means to inform said control means of the correctness of the participant's response and for causing the score keeping means to add or deduct points from each of the participant's scores;
    (6) output means to inform each participant of his total score as assigned by said score keeping means;
    (7) data means to both provide questions to the participant for a response as well as to provide signals to said control means: whereby when the game is played, data means are activated by said control means to provide questions to the participants who are permitted by said time keeping means to respond to said question within a first predetermined time by one participant activating said response means, at which time said respondent answers the question correctly or incorrectly, and the remaining participants are permitted by said time keeping means to challenge the correctness of said answer within a second predetermined time, signifying a challenge by activating their response means, if no challenge is made, points are automatically awarded to the participant activating said response means during the first predetermined time and if challenged, the correctness of the participant's answer is judged by comparing said answer to that provided by said data means, whereby the input means is activated for causing said score keeping means to display the resultant score of said participants upon said output means to inform the participants of their scores.
2. The game of Claim 1, wherein the data means comprises a tape.
3. The game of Claim 1 or 2, wherein the game is a trivia game.
4. A trivia game in an integrated format, said game comprising:
    (a) memory storage and microprocessing means to co-ordinate the play of said game, said memory storage and microprocessing means comprising, game logic contained therein to co-ordinate the play of the said game, score keeping means contained therein to retain and assign the scores of all participants and time counting means to account for the passage of time within said game and communicate said passage to the participants;
    (b) response means for each participant to communicate with said memory storage and microprocessing means that one player is responding;
    (c) input means to inform said memory storage and microprocessing means of the correctness of a participant's response;
    (d) output means to inform each participant of his scores as assigned by said score keeping means;
    (e) data means to both provide questions to the participants for a response under the control of said memory storage and microprocessing means, whereby as said game is played, said data means activated by said memory storage and microprocessing means provides questions to the participants and data to said memory storage and microprocessing means, which participants are prompted by a time countdown by said time counting means contained within said memory storage and microprocessing means to respond to said questions within a first specified time period and signify their intention to respond by activating said response means, whereby in doing so successfully, said respondent answers the question either correctly or incorrectly, and the remaining participants are prompted by said time keeping means to challenge the correctness of said answer within a second specified time period, signifying their intention to challenge to said memory storage and microprocessing means by activating said response means, whereat the correctness of a respondent's answer is judged following the second specified time period by comparing said answer to that contained within said data means controlled and activated by said memory storage and microprocessing means, the correctness of said answer thereafter communicated to said score keeping means by said input means, whereby if no challenge is made during second specified time period, an automatic score is awarded to the participant activating said response means during the first specified time period; the resultant score of said participants thereafter awarded to each participant by said score keeping means, as instructed by said memory storage and microprocessing means and thereafter, displayed upon said output means to inform the participants of their scores.

5. The game of Claim 4, wherein said data means comprises a tape playable by a sterio playback head having two tracks, one track carrying the questions and the other track carrying inaudible tones to provide information about the gaming process which tape when scanned by a stereo playback head, provides the audio signals in the form of questions through a speaker, and provides said memory storage and microprocessing means with inaudible tones to provide input to the memory storage and microprocessing means for example as to the points to be awarded for a given question.

6. A game comprising a modular case having a top, bottom and two ends, the case having disposed therein a tape player upon which a programmed tape is played, the programmed tape comprising a first and second track, the first track providing questions and answers in audio format for the respondents, the second track providing output data for co-ordination of said game and for example to indicate to a microprocessor the point value of the following questions on the first track, response buttons for participants positioned about some of the perimeter of said modular case, a speaker to output the audio contents of said programmed tape, means to permit the memory storage and microprocessor to understand the contents of the tape, a pre-programmed memory storage and microprocessor for receiving the understandable programmed tones to co-ordinate the game according to its pre-established logic contained therewithin, said memory storage and microprocessor also containing both the time keeping and score keeping functions to enhance and simplify the game operation, an array of indicators for providing information to each participant, a right and wrong button to provide input to said memory storage and microprocessor as to the correctness of the answer given, said memory storage and microprocessor having contained therein a program to co-ordinate the playing of said game on the basis of input from; said tape player providing signals programmed on said tape to inform said memory storage and microprocessor of the type of question about to be asked and the scoring and strategy to be used in co-ordinating said game; said response buttons providing input to said memory storage and microprocessor means as to which participant has firstly indicated his intention to answer the question asked, found within the program of the tape, and which participants are challenging the answer given; said wrong and right buttons providing input to the memory storage and microprocessing means as to the correctness of the response given; said memory storage and microprocessor means providing on the basis of its pre = programmed logic and the inputs given; outputs to control the playing of the said tape on said tape player, and to display the scores accumulated for each participant in its registers, adding to said scores any points acquired during the last question as a result of a correct answer and/or challenge and subtracting from said scores any points lost during the last question as a result of an incorrect answer and/or challenge prior to the displaying of said scores; whereby as the game is played, said tape player is selectively activated by said memory storage and microprocessor thereby providing questions to the participants and data to said memory storage and microprocessor, each participant being prompted to response to said question by a time countdown, said intention to respond indicated by activating said response buttons within a first specified time period, the activation of which signifies the intent of a participant to respond to said question to said memory storage and microprocessing means, whereby doing so successfully, said respondent answers the question either correctly or incorrectly, and the remaining participants are prompted by said time countdown to challenge the correctness of said answer within a second specified time period, the participants signifying their intention to challenge by activating said response buttons, whereat the correctness of respondent's answer is judged by comparing said answer to that contained within the tape controlled and activated by said memory storage and microprocessor, the correctness of said answer thereafter communicated to the memory storage and microprocessor by the participants via said right or wrong buttons, wherein a score keeping function of the memory storage and microprocessor awards the correct points to each participant as instructed by the program therewithin, the scores thereafter displayed to inform the participants of their scores.

7. The game of Claim 6, wherein the data contained upon the tape to co-ordinate the game are inaudible tones.

8. The game of Claim 6 or 7, wherein the modular case is formed of thermoplastics material.

9. The trivia game of Claim 6, 7 or 8, comprising a pause button to allow a controlled break in the play of the game.

10. The game of Claim 6, 7, 8 or 9 wherein the means to permit the memory storage and microprocessor to understand the contents of the tape is a tone decoder to decode the programmed tones on said tape to a format understood by said memory storage and microprocessor.

11. For a tape player having contained therein a tape player housing read heads, and a pair of drive spindles for forwardly driving a tape, a unique dust cover housing pivotably secured to the tape player pivotable from a position co-planar with the tape player to a position angled with respect thereto for receiving and protecting a tape and further protects the read heads from dust, the read heads slideably engageable with the tape at a position of primary engagement for reading said tape and slideably disengageable from the tape by moving laterally to a position laterally remote said tape, said dust cover housing carrying ejecting means for ejecting said tape when pivoted at an angle to the tape player thereby eliminating all control buttons from said tape player, said dust cover housing having a top, bottom, and plurality of sides, the top and bottom spaced apart a distance to present a mouth and to allow therebetween the retention of the programmed tape, said top and bottom being pivotable at the ends thereof with respect to said tape player and with respect to one another, said bottom comprising two members, said first member for co-operatively engaging and ejecting the tape with said top and said second member being resiliently biased in a lateral direction for slideably disengaging or engaging the read heads of said tape player when the dust cover housing is pivoted from a position of primary engagement with the tape to a position of secondary engagement.

12. The game of Claim 7 or 9, further comprising programmed bonus questions and special rounds thereon, each situation being communicated to and sensed by the memory storage and microprocessor via a pre-specified series of inaudible tones found upon the second track of the programmed game tape, said bonus question enhancing the usual available points for the correct answer and/or challenge of a given random question.

13. The game of Claim 12 wherein the enhancing of the available points doubles or triples the points awarded.

14. The game of claim 12 or 13, wherein the special rounds also provide for the handicapping of players where those with the lowest score are given time in advance to the time allotted higher scoring players to respond to the questions whereby his/her response button is activated in advance of the activation of the higher scorer's response button, so that the lowest scorer's button is activated first, then the second lowest scorer's button, then the third lowest scorer until the highest scorer thereby giving said lowest scoring participants an opportunity to close the gap in scoring.

15. The game of Claim 2, 5, 6, 7, 9 or 10, wherein the tape is recorded at other than standard speed and is driven by a motor at said non-standard speed to provide normal sounding audible tapes.

16. For a trivia game employing a memory storage and microprocessor and a tape player, a tape containing the questions for the game and the signals for operating and co-ordinating the play of the game, the tape recorded at other than standard speed to be driven by the tape player at such non-standard speed.

17. The tape of Claim 16, wherein the tape has two tracks on each side.

18. The game of Claim 6. 7, or 10 wherein the indicators comprise light emitting diodes coupled to individual display drivers to amplify the scores provided by the memory storage and microprocessor prior to display.

19. The game of Claim 18, wherein the display drivers and the memory storage and microprocessors are software multiplexed during the transmission of the scores, said multiplexing function contained within the memory storage and microprocessor program as opposed to the provision in the game circuitry for a hardware multiplexor.

20. A method for playing a game, said method comprising:

(a) administering a question from subgroups of scoring categories to the participants, said question being randomly selected from storage media being ordinary, bonus, or special in designation;

(b) determining the first participant to indicate his/her intention to respond to said question;

(c) precluding the other participants from responding;

(d) permitting a first time period to pass during which the first participant must answer the question;

(e) permitting a second time period to pass within which the remaining participants may challenge the answer given;

(f) determining the correctness of the answer given;

(g) determining if any of the participants have challenged the answer to the given question and

(i) if none of the participants has challenged the answer to the given questions, awarding points to the first participant and

(ii) if at least one of the participants challenged the answer to the question, awarding points to those participants who were correct and subtracting points from those that were incorrect;

(h) determining an updated score for all participants;

(i) repeating the aforementioned steps for each question until a ranking of participants is determined upon termination of the game.

21. The method of Claim 20 wherein for example, with respect to step g(ii), if one of the participants challenges successfully then points are awarded to the successful challenger and subtracted from the score of the first participant and if one of the participants challenges unsuccessfully, then points are subtracted from the score of the participant who challenged and points awarded to the first participant including any bonus points if available.

22. The method of Claim 20 or 21, wherein the game is for at least two participants.

23. A method for playing a game is provided, said method comprising:

(a) administering a question from subgroups of scoring categories to the participants, said question being ordinary, bonus, or special in designation;

(b) determining the first participant to indicate his/her intention to respond to said question;

(c) precluding the other participants from responding;

(d) permitting a first time period to pass during which the first participant must answer the question;

(e) permitting a second time period to pass within which the remaining participants may challenge the answer given;

(f) determining the correctness of the answer given;

(g) determining if any of the participants have challenged the answer to the given question and

(i) if none of the participants have challenged the answer to the given question, awarding points to the first participant

- and -

(ii) if at least one of the participants challenged the answer to the question, awarding points to those participants who were correct and subtracting points from those that were incorrect;

(h) determining an updated score for all participants;

(i) repeating the aforementioned steps for each question until a ranking of participants is determined upon termination of the game.

24. The method of Claim 23, wherein for example, with respect to step g(ii), if one of the participants challenges successfully, then points are awarded to the successful challenger and subtracted from the score of the first participant and if one of the participants challenges unsuccessfully, then points are subtracted from the score of the participant who challenged and points awarded to the first participant including any bonus points if available.

25. The method of Claim 23 or 24, wherein the game is for at least two participants.

26. The unique dust cover of Claim 11, wherein said first and second members have means disposed thereupon proximate the adjacent edges thereof to ensure proper alignment thereof when receiving a tape to be played and positioning said tape proximate said read head, and preventing damage to the tape or tape player if the means are not aligned by retaining the read head remote the tape.

27. The game of Claim 6, 7, or 10, wherein a tape player housing read heads, and a pair of drive spindles for forwardly driving a tape, a unique dust cover housing pivotably secured to the tape player pivotable from a position co-planar with the tape player to a position angled with respect thereto for receiving and protecting a tape and further protects the read heads from dust, the read heads slideably engageable with the tape at a position of primary engagement for reading said tape and slideably disengageable from the tape by moving laterally to a position laterally remote said tape, said dust cover housing carrying ejecting means for ejecting said tape when pivoted at an angle to the tape player thereby eliminating all control buttons from said tape player, said dust cover housing having a top, bottom, and plurality of sides, the top and bottom spaced apart a distance to present a mouth and to allow therebetween the retention of the programmed tape, said top and bottom being pivotable at the ends thereof with respect to said tape player and with respect to one another, said bottom comprising two members, said first member for co-operatively engaging and ejecting the tape with said top and said second member being resiliently biased in a lateral direction for slideably disengaging or engaging the read heads of said tape player when the dust cover housing is pivoted from a position of primary engagement with the tape to a position of secondary engagement.

28. The game of Claim 1, 4 or 6 wherein the game may be played in team or individual modes.

29. The method of playing a game of Claim 20 or 23 wherein the game may be played in team or individual mode.

30. The game of Claim 28 wherein the game may further be played in either beginner or advanced modes for both the beam and individual modes.

31. The method of playing a game of Claim 29 wherein the game may further be played in either beginner or advanced modes for both the team and individual modes.

32. The unique dust cover of Claim 27 wherein said first and second members have means disposed thereupon proximate the adjacent edges thereof to ensure proper alignment thereof when receiving a tape to be played and positioning said tape proximate said read head, and preventing damage to the tape or tape player if the means are not aligned by retaining the read head remote the tape.

33. The game of Claim 1, 3 or 4 comprising a video game wherein both audio and visual information are presented to the participants, for assimilation of said information in playing the game and for enhancing the presentation of the game to the participants, said game comprising a microcomputer to coordinate the playing of the game, to interface with the input means of the game, to select the questions to be played randomly in the game, to provide the smooth transfer of data and to coordinate the output of audio and picture information; memory storage means, the means being responsible for retrieving data according to the instructions of the first microcomputer of the control means; and data means comprising two separate functions for managing the video and audio output data signal assimilation and for converting the aforementioned digital data into analogue form as necessary and/or into an array of information to be communicated to a CRT output display or speaker.

34. The game of Claim 33 wherein the memory storage means comprises a compact disk read only memory including a second microcomputer, a compact disk read only memory drive, a two-part buffer disk and a local memory.

35. The game of Claim 33 wherein the video game comprises an integrated format wherein the entire game is embodied as a coin operated video unit wherein the video display is oriented in a horizontal direction and the housing for the game includes a horizontal surface, for example a table around which the participants sit and inter-relate as the game is played.

36. The game of Claim 34 wherein the video game comprises an integrated format wherein the entire game is embodied as a coin operated video unit wherein the video display is oriented in a horizontal direction and the housing for the game includes a horizontal surface, for example a table around which the participants sit and inter-relate as the game is played.

0268476

FIG.1.

FIG.2.

0268476

FIG.3.

0268476

FIG.4.

0268476

FIG.4A.

0268476

FIG.5A.

T
35
242
221
241
700
247
800
218
215
246
245
200
321
320 248
250

FIG.5B. 35
243
35
320
248
240a
241
321
242

215
700
243
321
320
246 248
800
242
241
FIG.5C. 250 246 248 800 242
320
700

0268476

FIG.5D.

35

321
250 320 248 800

244

T

35
243
240a
241
242

244
300
FIG.5E.
310
244

700 800
215 248
218

247

0268476

FIG.5.

207      35

221

220

215

218

230

300

206

320

FIG.5F.

248    230

221     220    210

247

$P_3$    $P_1$    $P_4$    $P_2$

FIG.6.

0268476

FIG.7.

FIG.7A.

FIG.7B.

FIG.8.

FIG.8A.

0268476

FIG.7C. 215  246a  246  248  242  241
245b  245  245a  210  700  35

FIG.7D. 215  246a  245a  210  245b  245  35  248  242  241
246

FIG.7E. 245b  35  248
215  246a  245a  246  242  241
210

FIG.9. 246  215  210
FIG 9A. 246  215  210

0268476

FIG.9 B.

FIG.9C.

FIG.9D.

FIG.10A.

0268476

FIG.10 B.

VI

X

II

FIG.10 C.

FIG.11.

FIG.12.

FIG.13.

FIG.14.

0268476

FIG.15.

FIG.16.

FIG.17.

FIG.18.

0268476

FIG.19.

FIG.20.

FIG.21.

FIG.22.

0268476

FIG.23.

FIG.24.

FIG.25.

FIG.26.

0268476

FIG.27.

70

7

80

30

FIG.28.

O

70

7

80

30

Q

0268476

FIG.29,.  CALL MY BLUFF FLOW DIAGRAM

MAINLINE

0268476

FIG.29₂.

0268476

FIG. 29₃.

0268476

FIG.29₄.

0268476

FIG.29₅.

WRONG BUTTON → NEXT QUESTION SPECIAL? — Y →

N ↓

CALL WRONG SCORE ← Y — BONUS QUESTION? — N → CALL WRONG SCORE

SHOW SCORE

CALL DISPLAY SCORE → CALL INITNEXT → GAMESTART

SUBROUTINES

FIG.29₆.

GAMEMODE

DISPLAY MODE 1

MODE TIMER = 30S

MODE TIMER EXPIRED? — N → RIGHT/ WRONG BUTTON PRESSED? — N → MODE 4 DISPLAYED? — Y

INC GAME MODE

DEFAULT MODE 1

RIGHT BUTTON PRESSED?

5    6

0268476

## FIG. 29₇.

## FIG. 29₈.

0268476

**FIG. 29₉.**

INIT NEXT

GET READY FOR NEXT QUESTION

GAME WINNER ? — Y → CALL WINNER BUZZ

N

RETURN

**FIG 29₁₀**

INIT

INITIALIZE GAME VARIABLES

RETURN

**FIG. 29₁₁.**

TAPE END

WAIT 5 SEC STOP MOTOR

RIGHT WRONG BUTTON PRESSED? — N

Y

START MOTOR → RETURN

0268476

FIG. 29₁₂.  ( FATAL )

```
┌─────────────┐
│ ALL LEDS/   │
│ SCORES OFF  │
│ BUZZER ON   │
│ FOR IO SEC  │
│ MOTOR OFF   │
└─────────────┘
```

```
┌─────────────┐
│ LOOP        │
│ FOREVER     │
└─────────────┘
```

FIG. 29₁₃.  ( ZEROBUFF )

```
┌─────────────┐
│ PLAYER      │
│ SCORES = 0  │
└─────────────┘
```

RETURN

FIG. 29₁₄.  ( WINNERBUZZ )

```
┌─────────────┐
│ STOP MOTOR  │
│ FLASH LED(S)│
│ OF WINNER(S)│
│ BUZZER ON/  │
│ OFF         │
└─────────────┘
```

RETURN

0268476

FIG. 29₁₅.

0268476

FIG. 29₁₆.

FIG. 29₁₇.

FIG. 29₁₈.

0268476

FIG.29₁₉.

0268476

FIG. 29_{20}.

0268476

FIG.29₂₁

0268476

FIG_29₂₂.

CHECK
TIME UP

ALL BUTTONS ENABLED? →N→ TIME EXPIRED FOR WATCHING BUTTONS? →N

Y

DO A DOWN COUNT? →Y→ STOP MOTOR DO A DOWN COUNT

N

RETURN        VALID BUTTON

LOW SCORE ON

FIND (NEXT) LOWEST SCORE(S)

FIG_29₂₃.

TEAM MODE? →Y→ TURN ON LEDS OF TEAM WITH (NEXT) LOWEST SCORE

N

TURN ON LED(S) OF PLAYER(S) WITH (NEXT) LOWEST SCORE(S)

RETURN

0268476

FIG. 29 24.

Flowchart: COUNT DOWN

COUNT DOWN

BEGINNER MODE? —Y→ DISPLAY "5" WAIT 1 SEC. → DISPLAY "4" WAIT 1 SEC.

↓ N

DISPLAY "3" WAIT 1 SEC. → DISPLAY "2" WAIT 1 SEC. → DISPLAY "1"

↓

ANY CHALLENGER? —N→ ... —Y→ CURRENT QUESTION SPECIAL? —N→ CALL TEST BUTTON

CURRENT QUESTION SPECIAL? —Y→ CALL VALIDBUT

"1" DISPLAYED FOR 1 SEC? —N→ ... —Y→ DISPLAY "0"

ANY CHALLENGER? —Y→ CURRENT QUESTION SPECIAL? —N→ CALL TEST BUTTON
↓ N
CURRENT QUESTION SPECIAL? —Y→ CALL VALIDBUT

"0" DISPLAYED FOR 1 SEC? —Y→ RETURN
↓ N

0268476

FIG.29_{25}.

RIGHT SCORE

INC IST RESPONDENTS SCORE ACCORDING TO QUESTION TYPE

SCORE ≥ 99? — N

CALL WINNER — Y

DEC CHALLENGER SCORE(S) ACCORDING TO QUESTION TYPE — Y — ANY CHALLENGERS

N — RETURN

FIG.29_{26}.

WRONG SCORE

DEC IST RESPONDENTS SCORE ACCORDING TO QUESTION TYPE.

ANY CHALLENGERS? — N

INC CHALLENGER SCORE(S) ACCORDING TO QUESTION. TYPE — Y

SCORE(S) ≥ 99? — N

CALL WINNER — Y

RETURN

0268476

FIG. 29₂₇.

WINNER
PLAYER(S) SCORE(S) ≥ 99? → Y → FLAG WINNER FLASH LED(S)
N
TEAM MODE? → N → RETURN
TEAM I WON? → Y FLASH LEDS 1,2 & 3
TEAM 2 WON? → Y FLASH LEDS 4,5 & 6

FIG. 29₂₈.

DELAY
WAIT UNTIL COUNTERS IN SERVICE ROUTINE ARE DEC. TO ZERO → RETURN

0268476

## FIG.29₂₉.

## FIG.29₃₀.

18

0268476

FIG. 29₃₁

FIG. 29₃₂.

FIG. 29₃₃.

19

0268476

FIG. 29₃₄.

0268476

FIG. 29₃₅.

CHECK LED1 → FLASH LED1? —Y→ UPDATE FLASH COUNTER

FLASH LED1? —N→ TURN LED1 ON?

TURN LED1 ON? —N→ LED1 OFF

TURN LED1 ON? —Y→ LED1 ON

UPDATE FLASH COUNTER → TIME TO TURN LED 1 ON? —Y→ LED1 ON

TIME TO TURN LED 1 ON? —N→ LED1 OFF

DONE

FIG. 29₃₆.

CHECK LED3 → MULTIPLEX LED3? —N→ CHECK LED 4

MULTIPLEX LED3? —Y→ FLASH LED3? —Y→ UPDATE FLASH COUNTER

FLASH LED3? —N→ TURN LED3 ON?

TURN LED3 ON? —N→ LED3 OFF

TURN LED3 ON? —Y→ LED3 ON

UPDATE FLASH COUNTER → TIME TO TURN LED 3 ON? —Y→ LED3 ON

TIME TO TURN LED 3 ON? —N→ LED3 OFF

DONE

0268476

CHECK LED 4 → MULTIPLEX LED 4 ? — N → CHECK DISPLAY 2

Y → FLASH LED 4 ? — Y → UPDATE FLASH COUNTER

FLASH LED 4 ? — N → TURN LED 4 ON?

TURN LED 4 ON? — N → LED 4 OFF

TURN LED 4 ON? — Y → LED 4 ON

UPDATE FLASH COUNTER → TIME TO TURN LED 4 ON ? — Y → LED 4 ON

TIME TO TURN LED 4 ON ? — N → LED 4 OFF

DONE

FIG. 29₃₇.

0268476

FIG.29₃₉.

FIG.29₄₀.

0268476

FIG.29₃₈.

0268476

FIG. 29₄₁.